(19) Europäisches Patentamt
European Patent Office
Office européen des brevets

(11) **EP 4 390 881 A1**

(12) **EUROPEAN PATENT APPLICATION**
published in accordance with Art. 153(4) EPC

(43) Date of publication:
**26.06.2024 Bulletin 2024/26**

(21) Application number: **23861709.6**

(22) Date of filing: **14.08.2023**

(51) International Patent Classification (IPC):
***G06V 40/16*** *(2022.01)*

(52) Cooperative Patent Classification (CPC):
**G06T 13/40; G10L 21/00**

(86) International application number:
**PCT/CN2023/112814**

(87) International publication number:
**WO 2024/051445 (14.03.2024 Gazette 2024/11)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **05.09.2022 CN 202211080126**

(71) Applicant: **Tencent Technology (Shenzhen)
Company Limited
Shenzhen, Guangdong, 518057 (CN)**

(72) Inventors:
• XU, Chao
Shenzhen, Guangdong 518057 (CN)
• ZHU, Junwei
Shenzhen, Guangdong 518057 (CN)
• CHU, Wenqing
Shenzhen, Guangdong 518057 (CN)
• TAI, Ying
Shenzhen, Guangdong 518057 (CN)
• WANG, Chengjie
Shenzhen, Guangdong 518057 (CN)

(74) Representative: **Nederlandsch Octrooibureau
P.O. Box 29720
2502 LS The Hague (NL)**

(54) **IMAGE GENERATION METHOD AND RELATED DEVICE**

(57) This application discloses an image generation method and related devices, and related embodiments may be applied to various scenarios such as cloud technology, artificial intelligence, intelligent transportation, and assistant driving. An original face image frame, audio driving information, and emotion driving information of a to-be-adjusted object may be obtained; spatial feature extraction is performed on the original face image frame, to obtain an original face spatial feature; feature interaction processing is performed on the audio driving information and the emotion driving information, to obtain a face local pose feature; and face reconstruction processing is performed on the to-be-adjusted object based on the original face spatial feature and the face local pose feature, to generate a target face image frame. In this application, partial face pose detail information of the to-be-adjusted object may be captured using the audio driving information and the emotion driving information, and then face adjustment is performed on the original face image frame, to obtain the corresponding target face image frame. In this way, an improvement in generation efficiency and accuracy of the target face image frame is facilitated.

FIG. 1b

The flowchart shows:
- Obtain an original face image frame, audio driving information, and emotion driving information — 101
- Extract an original face spatial feature from the original face image frame — 102
- Perform feature interaction processing on the audio driving information and the emotion driving information, to obtain a face local pose feature of the to-be-adjusted object when issuing the voice content with the target emotion — 103
- Perform, based on the original face spatial feature and the face local pose feature, face reconstruction processing on the to-be-adjusted object, to generate a target face image frame — 104

**Description**

RELATED APPLICATION

This application claims priority to Chinese Patent Application No. 202211080126.5, filed with the China National Intellectual Property Administration on September 05, 2022 and entitled "IMAGE GENERATION METHOD AND RELATED DEVICE".

FIELD OF THE TECHNOLOGY

This application relates to the field of computer technologies, and in particular to an image generation technology.

BACKGROUND OF THE DISCLOSURE

With the development of computer technologies, image processing technologies are applied to more and more fields. For example, the image processing technologies may include image generation, which may be face image generation. The face image generation may be applied to fields such as animation production.
In a current related technology, if face images for the same to-be-adjusted object in different face poses need to be obtained, a modeler and an animator need to draw the face images in the face poses respectively. As a result, this image generation manner is relatively time-consuming and labor-consuming, and image generation efficiency is low.

SUMMARY

Embodiments of this application provide an image generation method and related devices, and the related devices may include an image generation apparatus, an electronic device, a computer-readable storage medium, and a computer program product, and may improve generation efficiency and accuracy of a target face image frame.
The embodiments of this application provide an image generation method, executable by an electronic device, and including:

obtaining an original face image frame, audio driving information, and emotion driving information of a to-be-adjusted object, the original face image frame including an original face of the to-be-adjusted object, the audio driving information including voice content for the to-be-adjusted object, and being configured to drive a face pose of the original face to change according to the voice content, and the emotion driving information indicating a target emotion of the to-be-adjusted object when issuing the voice content, and being configured to drive the face pose of the original face to change according to the target emotion;

extracting an original face spatial feature from the original face image frame;

performing feature interaction processing on the audio driving information and the emotion driving information, to obtain a face local pose feature of the to-be-adjusted object issuing the voice content with the target emotion; and

performing, based on the original face spatial feature and the face local pose feature, face reconstruction processing on the to-be-adjusted object, to generate a target face image frame.

Correspondingly, the embodiments of this application provide an image generation apparatus, deployed on an electronic device, and including:

an obtaining unit, configured to obtain an original face image frame, audio driving information, and emotion driving information of a to-be-adjusted object, the original face image frame including an original face of the to-be-adjusted object, the audio driving information including voice content for the to-be-adjusted object, to drive a face pose of the original face to change according to the voice content, and the emotion driving information indicating a target emotion of the to-be-adjusted object when issuing the voice content, to drive the face pose of the original face to change according to the target emotion;

an extraction unit, configured to extract an original face spatial feature from the original face image frame;

an interaction unit, configured to perform feature interaction processing on the audio driving information and the emotion driving information, to obtain a face local pose feature of the to-be-adjusted object issuing the voice content with the target emotion; and

a reconstruction unit, configured to perform, based on the original face spatial feature and the face local pose feature, face reconstruction processing on the to-be-adjusted object, to generate a target face image frame.

The embodiments of this application provide an electronic device, including a processor and a memory, the memory storing a computer program, and the processor loading the computer program, to perform the method provided in the embodiments of this application.

The embodiments of this application further provide a computer-readable storage medium, storing a computer program, the computer program, when executed by a processor, implementing the method provided in the embodiments of this application.

In addition, the embodiments of this application further provide a computer program product, including a computer program, the computer program, when executed by a processor, implementing the method provided in the embodiments of this application.

The embodiments of this application provide an image generation method and related devices, where an original face image frame, audio driving information, and emotion driving information of a to-be-adjusted object may be obtained, the original face image frame including an original face of the to-be-adjusted object, the audio driving information including voice content for the to-be-adjusted object, to drive a face pose of the original face to change according to the voice content, and the emotion driving information indicating a target emotion of the to-be-adjusted object when issuing the voice content, to drive the face pose of the original face to change according to the target emotion; and spatial feature extraction is performed on the original face image frame, to obtain an original face spatial feature corresponding to the original face image frame. Feature interaction processing is performed on the audio driving information and the emotion driving information, to obtain a face local pose feature of the to-be-adjusted object, and the face local pose feature may reflect the current voice content and the emotion-induced change in the face pose, so that face reconstruction processing is performed on the to-be-adjusted object based on the original face spatial feature and the face local pose feature, thereby generating a target face image frame based on the original face image frame. In this application, partial face pose detail information of the to-be-adjusted object may be captured using the audio driving information and the emotion driving information, and then face adjustment is performed on the original face image frame based on the captured information, thereby obtaining the corresponding target face image frame. In this way, an improvement in generation efficiency and accuracy of the target face image frame is facilitated.

BRIEF DESCRIPTION OF THE DRAWINGS

To describe the technical solutions in the embodiments of this application more clearly, the following briefly describes the accompanying drawings required for describing the embodiments. Apparently, the accompanying drawings in the following description show merely some embodiments of this application, and a person skilled in the art may still derive other drawings from these accompanying drawings without creative efforts.

FIG. 1a is a schematic scenario diagram of an image generation method according to an embodiment of this application.

FIG. 1b is a flowchart of an image generation method according to an embodiment of this application.

FIG. 1c is a description diagram of an image generation method according to an embodiment of this application.

FIG. 1d is another description diagram of an image generation method according to an embodiment of this application.

FIG. 1e is a model structure diagram of an image generation method according to an embodiment of this application.

FIG. 1f is another model structure diagram of an image generation method according to an embodiment of this application.

FIG. 2 is another flowchart of an image generation method according to an embodiment of this application.

FIG. 3 is a schematic structural diagram of an image generation apparatus according to an embodiment of this application.

FIG. 4 is a schematic structural diagram of an electronic device according to an embodiment of this application.

DESCRIPTION OF EMBODIMENTS

The technical solutions in the embodiments of this application are clearly described in the following with reference to the accompanying drawings. Apparently, the embodiments to be described are merely a part rather than all of the embodiments of the present application. All other embodiments obtained by a person skilled in the art based on the embodiments of this application without creative efforts shall fall within the protection scope of this application.

The embodiments of this application provide an image generation method and related devices, and the related devices may include an image generation apparatus, an electronic device, a computer-readable storage medium, and a computer program product. The image generation apparatus may be integrated in an electronic device, and the electronic device may be a device such as a terminal or a server.

It may be understood that, the image generation method in this embodiment may be performed on a terminal, or may be performed on a server, or may be performed by a terminal and a server jointly. The above examples are not to be construed as limiting this application.

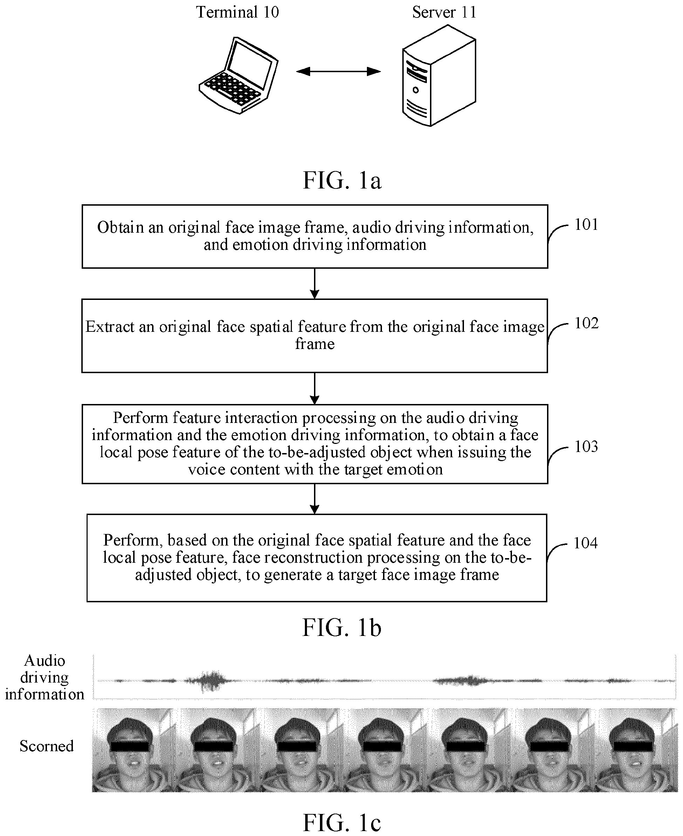

As shown in FIG. 1a, an example in which a terminal and a server jointly perform an image generation method is taken. An image generation system provided in the embodiments of this application includes a terminal 10 and a server 11; and the terminal 10 and the server 11 are connected to each other through a network, for example, a wired or wireless network, where an image generation apparatus may be integrated in the server.

The server 11 may be configured to: obtain an original face image frame, audio driving information, and emotion driving information of a to-be-adjusted object, the original face image frame including an original face of the to-be-adjusted object, the audio driving information including voice content for the to-be-adjusted object, and being configured to drive a face pose of the original face to change according to the voice content, and the emotion driving information indicating a target emotion of the to-be-adjusted object when issuing the voice content, and being configured to drive the face pose of the original face to change according to the target emotion; perform spatial feature extraction on the original face image frame, to obtain an original face spatial feature corresponding to the original face image frame; perform feature interaction processing on the audio driving information and the emotion driving information, to obtain a face local pose feature of the to-be-adjusted object; and perform, based on the original face spatial feature and the face local pose feature, face reconstruction processing on the to-be-adjusted object, to generate a target face image frame, and sending the target face image frame to the terminal 10. The server 11 may be one server, a server cluster including a plurality of servers. In the image generation method or apparatus disclosed in this application, a plurality of servers may form a blockchain, and the servers are nodes on the blockchain.

The terminal 10 may be configured to receive the target face image frame sent by the server 11. The terminal 10 may include a mobile phone, an intelligent television, a tablet computer, a notebook computer, a personal computer (PC), an intelligent voice interaction device, an intelligent household appliance, an in-vehicle terminal, an aircraft, or the like. A client may be further disposed on the terminal 10, and the client may be an application program client, a browser client, or the like.

The foregoing step of generating the target face image frame by the server 11 may alternatively be performed by the terminal 10.

The image generation method provided in the embodiments of this application relates to computer vision technologies, voice technologies, and natural language processing in the field of artificial intelligence.

Detailed descriptions are made below separately. The description orders of the following embodiments are not intended to limit preference orders of the embodiments.

This embodiment is described from the perspective of an image generation apparatus. The image generation apparatus may be integrated in an electronic device, and the electronic device may be a device such as a server or a terminal.

It may be understood that, related data such as user information is involved in implementations of this application. When the above embodiments of this application are applied to a product or technology, permission or consent of a user is required, and collection, use, and processing of the related data need to comply with related laws, regulations, and standards of related nations and districts.

This embodiment may be applied to various scenarios such as cloud technology, artificial intelligence, intelligent transportation, and assistant driving.

As shown in FIG. 1b, a procedure of the image generation method may be as follows:

101. Obtain an original face image frame, audio driving information, and emotion driving information.

The original face image frame includes an original face of a to-be-adjusted object, that is, the original face image frame is an image containing an original face of a to-be-adjusted object, and the to-be-adjusted object may be an object whose face pose is to be adjusted. The face pose mentioned herein may refer to a face expression, for example, object face information such as a mouth shape or a gaze. This is not limited in this embodiment. An emotion presented by the face of the to-be-adjusted object in a target face image frame may correspond to the emotion driving information, and the mouth shape of the to-be-adjusted object in the target face image frame may conform to the audio driving information.

The audio driving information is audio information configured for driving the face pose of the original face to change, the audio driving information includes voice content for the to-be-adjusted object, to drive the face pose of the original face to change according to the voice content, and the change herein is mainly a mouth shape change. To improve image generation efficiency, in this embodiment of this application, the audio driving information may be configured for replacing the face pose of the to-be-adjusted object in the original face image frame with a corresponding face pose of the to-be-adjusted object when speaking, to obtain the target face image frame, where audio information (that is, voice content) corresponding to the speaking of the to-be-adjusted object is the audio driving information, and the audio driving information is mainly driving information based on the voice content for the to-be-adjusted object. An audio length corresponding to the audio driving information may be 1 second or 2 seconds. This is not limited in this embodiment.

The emotion driving information is information configured for driving the face pose of the original face to change, and the emotion driving information indicates a target emotion of the to-be-adjusted object when issuing the voice content, to drive the face pose of the original face to change according to the target emotion, thereby adjusting the face pose to a face pose with the target emotion represented by the emotion driving information. The emotion driving information is mainly driving information based on an emotion of the to-be-adjusted object. The emotion driving information may have a plurality of information carriers, for example, text, audio, an image, and a video. This is not limited in this embodiment.

For example, the emotion driving information may be text containing emotion description information of "angry", and a face pose of the to-be-adjusted object in the target face image frame finally generated based on the emotion driving information may be with an angry emotion.

For another example, the emotion driving information may be a piece of audio containing emotion information "panic", an emotion recognition result "panic" may be obtained based on emotion recognition of the audio, and a face pose of the to-be-adjusted object in the target face image frame generated based on the emotion recognition result may be with an "panic" emotion.

For another example, the emotion driving information may alternatively be an image containing emotion information "excited", an emotion recognition result "excited" may be obtained based on emotion recognition of the image, and a face pose of the to-be-adjusted object in the target face image frame generated based on the emotion recognition result may be with an "excited" emotion.

In this embodiment, change information such as the mouth shape of the to-be-adjusted object when speaking may be determined using the voice content of the to-be-adjusted object contained in the audio driving information, pose information such as the gaze of the to-be-adjusted object may be determined using the target emotion contained in the emotion driving information, and then a change in the face pose of the to-be-adjusted object may be comprehensively determined.

For example, if voice content included in the audio driving information is "hello", a mouth shape of the to-be-adjusted object may be simply determined based on the audio driving information, thereby ensuring that the mouth shape is a mouth shape of "hello". In a case that the target emotion represented by the emotion driving information is "angry", although the mouth shape is still a mouth shape of pronunciation "hello", because the target emotion is "angry", and a face pose of a part such as a gaze is affected as a result of an emotion change, a face pose change caused by the target emotion may be superimposed based on the mouth shape of "hello".

In some embodiments, an emotion of the to-be-adjusted object may alternatively be determined according to speaking content and volume of the to-be-adjusted object contained in the audio driving information, and a change in the face pose of the to-be-adjusted object is determined with reference to the determination result and the emotion driving information.

In a scenario, in this embodiment, a plurality of pieces of audio driving information and emotion driving information of the to-be-adjusted object may be obtained; and for each piece of audio driving information, a target face image frame with a target emotion corresponding to each piece of audio driving information is generated according to the target emotion corresponding to each piece of audio driving information and the emotion driving information and the original face image frame, and then target face image frames with the target emotion corresponding to the pieces of audio driving information are spliced, to generate a target face video segment corresponding to the to-be-adjusted object with the target emotion. The target face video segment contains a face pose change process of the to-be-adjusted object when speaking with the target emotion, and audio information corresponding to the speaking of the to-be-adjusted object is the pieces of audio driving information. The leading role in the target face video segment is still the face of the object in the original face image frame, and the expression (particularly, the mouth shape) of the to-be-adjusted object in the generated target face video segment corresponds to the emotion driving information and the pieces of audio driving information.

In an embodiment, this application may alternatively be applied to a video repair scenario. For example, if a lecture video about the to-be-adjusted object is damaged, and some video frames in the lecture video are lost, the lost video frames may be generated or repaired using other video frames in the lecture video, audio information corresponding to the lost video frames, and an emotion label based on the image generation method provided in this application. The audio information configured for repair may be audio segments in 1 second before and after the lost video frames in the lecture video, the audio segments are the audio driving information in the foregoing embodiment, and the emotion label may be an emotion label corresponding to the lecture video or may be an emotion label of a lecturer in video frames before and after the lost video frames. This is not limited in this embodiment.

As shown in FIG. 1c, using an example in which the to-be-adjusted object is a human face, a target face image frame generated based on the original face image frame, the audio driving information, and the emotion driving information (for example, emotion description information corresponding to "scorned") is shown; and a mouth shape of a character in the target face image frame matches the audio driving information, and an emotion of the character conforms to the emotion driving information. The original face image frame may be considered as a to-be-driven original face image.

102. Extract an original face spatial feature from the original face image frame.

The original face spatial feature may include three-dimensional (3D) face coefficients corresponding to the original face image frame, for example, may include identity information, lighting, texture, expression, pose, and gaze. The face in the original face image frame may be reconstructed according to the face coefficients.

The original face spatial feature may be extracted from the original face image frame by performing convolution processing, pooling processing, and the like on the original face image frame. This is not limited in this embodiment.

In this embodiment, the original face spatial feature may be extracted from the original face image frame through an image feature extraction network. The image feature extraction network may be a neural network model, and the neural network may be a visual geometry group network (VGGNet), a residual network (ResNet), a densely connected convolutional network (DenseNet), or the like. However, it is to be understood that, the neural network of this embodiment is not merely limited to the several types listed above.

The image feature extraction network may be pre-trained, and 3D face coefficients corresponding to a face image may be predicted through the image feature extraction network.

In a scenario, the original face spatial feature corresponding to the original face image frame may be extracted using ResNet50 or another network structure, and the feature extraction process may be represented using the following formula (1):

$$coeff = D3DFR\left(I_{face}\right) \quad (1)$$

coeff is a 3D face coefficient, that is, the original face spatial feature corresponding to the original face image frame, D3DFR may represent ResNet50 or another network structure, and $I_{face}$ represent the original face image frame.

After the original face spatial feature is extracted, the original face spatial feature may be further screened to obtain a feature associated with a face pose of the to-be-adjusted object. For example, 3D face coefficients such as identity information, lighting, texture, expression, pose, and gaze may be extracted from the original face spatial feature, and the 3D face coefficients are used as a final original face of spatial feature.

103. Perform feature interaction processing on the audio driving information and the emotion driving information, to obtain a face local pose feature of the to-be-adjusted object issuing the voice content with the target emotion.

The feature interaction indicates combining different features according to a predetermined rule, to form a new feature. The feature interaction may help capture a relationship between features, and learn and use information in data from a plurality of perspectives, thereby enhancing prediction performance of the model. The predetermined rule may be, for example, addition, multiplication, squaring, or taking a root.

That is to say, in this embodiment of this application, the audio driving information and the emotion driving information may be combined according to a predetermined rule, thereby obtaining the face local pose feature. For example, the audio driving information and the emotion driving information may be added through addition, to obtain the face local pose feature. For another example, the audio driving information and the emotion driving information may be multiplied through multiplication, to obtain the face local pose feature.

In this embodiment, a manner of performing feature interaction processing on the audio driving information and the emotion driving information, to obtain a face local pose feature of the to-be-adjusted object issuing the voice content with the target emotion may be:

performing feature interaction processing on the audio driving information and the emotion driving information, to obtain interaction feature information; and

predicting the face local pose feature based on the interaction feature information and the emotion driving information.

The audio driving information may be an audio driving sequence, which may include at least one audio frame.

The performing feature interaction processing on the audio driving information and the emotion driving information may include combining the audio driving information and the emotion driving information according to a predetermined rule, to obtain interaction feature information. The interaction feature information may be obtained by combining a plurality of features, and may reflect a relationship between different features. In some embodiments, semantic feature may be extracted from the emotion driving information, to obtain an emotion semantic feature corresponding to the emotion driving information; and each of the at least one audio frame in the audio driving sequence is vectorized, to obtain an initial feature vector corresponding to the audio frame, and then dimension mapping is performed on the initial feature vector of the at least one audio frame, to obtain an audio feature vector corresponding to the at least one audio frame having the same quantity of dimensions. Then, feature interaction is performed on the emotion semantic feature and the audio feature vector of the at least one audio frame, to obtain the interaction feature information.

In a possible implementation, the feature interaction may include: sorting a token corresponding to each audio frame in the audio driving information in the order of the audio frames, to obtain a sorted token sequence; adding a token corresponding to the emotion driving information to the sorted token sequence, to obtain an updated token sequence; for each token in the updated token sequence, extracting feature information of the token; processing the feature information of the token by using feature information of a previous and a subsequent tokens of the token; fusing the processed feature information of respective tokens, to obtain the interaction feature information; and predicting the face local pose feature based on the interaction feature information and the emotion driving information. The prediction may be performed a neural network model, which may be obtained by performing training in advance.

The emotion semantic feature corresponding to the emotion driving information is considered as a token corresponding to the emotion driving information, and the audio feature vector of each audio frame in the audio driving sequence is considered as a token corresponding to , so that the feature interaction processing may include: sorting the token corresponding to the at least one audio frame in the order of the audio frame, to obtain a sorted token sequence, and a token corresponding to the emotion driving information is be added to the sorted token sequence, for example, at a position of a head or tail of the sequence, to obtain a target token sequence; for each token in the target token sequence, extracting feature information of the token, and processing the feature information of the token by using feature information of a token previous to the token and a token subsequent to the token, to obtain processed feature information of the token; fusing the processed feature information of respective tokens , to obtain interaction feature information. The fusing may be performed by splicing or weighted operation, such as weighted splicing, or the like.

In an embodiment, the audio driving information may include a plurality of audio frames, and a manner of performing feature interaction processing on the audio driving information and the emotion driving information, to obtain interaction feature information may be:

extracting object identity information in the original face spatial feature;

for each of the at least one audio frame in the audio driving sequence, encoding position information the audio frame, to obtain a position code of the audio frame;

combining the position code respectively corresponding to the at least one audio frame, to obtain position encoding (PE) information corresponding to the audio driving sequence; and

performing feature interaction processing on the object identity information, the PE information, the audio driving information, and the emotion driving information, to obtain the interaction feature information.

In some embodiments, the original face spatial feature may include 3D face coefficients such as object identity information, lighting, texture, expression, pose, and gaze that correspond to the original face image frame and from which object identity information corresponding to the to-be-adjusted object may be extracted.

The PE information corresponding to the audio driving information may include a frame number of each audio frame in the audio driving information. In the feature interaction processing process, by adding the PE information, a time sequence feature of the audio driving information may be fused into the interaction feature information.

Feature interaction processing is performed by combining the object identity information, the PE information, the audio driving information, and the emotion driving information, thereby improving accuracy of the feature interaction information, to make it convenient to reconstruct a more real face image frame subsequently.

In a possible implementation, a manner of predicting the face local pose feature based on the interaction feature information and the emotion driving information may be:

fusing the interaction feature information and the emotion driving information, to obtain fused feature information; and

decoding the fused feature information, to obtain the face local pose feature.

There are a plurality of manners of fusing the interaction feature information and the emotion driving information. This is not limited in this embodiment. For example, the fusion manner may be splicing processing or a weighting operation.

The performing decoding processing on the fused feature information may be performing attention processing on the fused feature information, thereby obtaining the face local pose feature corresponding to the target face image frame.

Given that an emotion usually relates to an intense extent (that is, intensity), so that face reconstruction processing may alternatively be performed with reference to emotion intensity information. Based on this, in a possible implementation, a manner of performing feature interaction processing on the audio driving information and the emotion driving information, to obtain a face local pose feature may be:

obtaining preset emotion intensity information corresponding to the emotion driving information; and

performing feature interaction processing on the audio driving information, the emotion driving information, and the preset emotion intensity information, to obtain the face local pose feature and updated emotion intensity information corresponding to the target face image frame, to make it convenient to perform face reconstruction processing subsequently using the face local pose feature and the updated emotion intensity information, to obtain a more real face image frame.

The emotion intensity information may reflect an intense extent of an emotion. For example, if an emotion is gladness, intense extents of gladness may be different, and then change extents of the face pose are also different, so that face pose changes caused based on the emotion driving information are different. Therefore, the face local pose feature may be determined based on the emotion intensity information. The emotion intensity information used herein may be emotion intensity information that is set in advance, that is, preset emotion intensity information. The preset emotion intensity information may be set according to an actual situation, or may be set randomly. This is not limited in this embodiment. The preset emotion intensity information is learnable.

For example, a mapping relationship among different emotions, emotion intensity information, and change extents of the face pose may be established in advance. In this way, after the emotion driving information and the preset emotion intensity information are obtained, a change extent of the face pose may be determined based on the mapping relationship, and then a face local pose feature is obtained with reference to the voice content included in the audio driving information, thereby adjusting the face pose of the to-be-adjusted object.

The updated emotion intensity information may be learned emotion intensity information, and may be configured for representing an intense extent of an emotion.

In an embodiment, the audio driving information and the emotion driving information may be transformed into the face local pose feature using a model based on attention mechanism, including an encoder and a decoder, such as the transformer network usually used in sequential modeling. The transformer is a model completely formed by an attention mechanism, and includes an encoder and a decoder, and input of the transformer network may be a sequence including one or more tokens.

When generation of a face image is driven using audio and emotion description, the audio driving information may first undergo feature processing. In an embodiment, each audio frame of the audio driving information may be vectorized, to obtain an audio driving sequence (denoted as $A_{1\text{-}32}$). The audio driving sequence may include audio feature information corresponding to each audio frame in the audio driving information. Further, the face feature is closely related to the object identity information, and human face identity information is not completely decoupled in an expression coefficient generated only based on the audio and the emotion description. Object identity information may be extracted from the original face image frame. The object identity information may be represented by a token ($\alpha$). The object identity information is input to the encoder ($\Phi$) of the model based on attention mechanism, such as the transformer. In an embodiment, to match a feature dimension in the encoder, dimension mapping may be first performed on the audio driving sequence $A_{1\text{-}32}$ and the object identity information $\alpha$, and then the audio driving sequence $A_{1\text{-}32}$ and the object identity information $\alpha$ that undergo dimension mapping are input to the encoder.

An emotion semantic feature (denoted as $z_{emo}$) may be extracted from the emotion driving information. In an embodiment, the emotion semantic feature may be extracted from the emotion driving information by using a contrastive language image pre-training (CLIP) model. The CLIP model is a multi-modal pre-training model, is a multi-modal model based on contrastive learning, is configured to learn a matching relationship between text and an image, and may contain one text encoder and one image encoder, which are respectively used to extract a text representation and an image representation. The CLIP model facilitates migration between a plurality of tasks, and therefore can be applied to other visual tasks.

In an embodiment, given that an emotion usually involves intensity, intensity information may be encoded to obtain a learnable emotion intensity token ($\sigma$), where $\sigma$ represents the preset emotion intensity information corresponding to the emotion driving information. In this embodiment, $z_{emo}$, PE information of the audio driving information, the audio driving information, the object identity information, and the learnable emotion intensity representation (that is, the preset emotion intensity information) are input to the encoder to perform feature interaction processing. In an embodiment, the feature interaction process is shown in Formula (2):

$$\hat{\sigma}, z = \phi([\sigma, \text{Linear}(\alpha), \text{Linear}(A)] + \text{PE} + z_{emo}) \quad (2)$$

where z is an intermediate feature of audio-emotion fusion, that is, the interaction feature information in the foregoing embodiments; $\hat{\sigma}$ is an updated learnable emotion intensity representation, that is, the updated emotion intensity information in the foregoing embodiments. Linear represents a linear layer, and may be used for dimension mapping; $\phi$ represents an encoder.

Then, the interaction feature information z and an emotion representation $z_{emo}$ corresponding to the emotion driving information may be fused, for example, added, and then a fusing result is input to the transformer decoder ($\Psi$) to predict an emotion coefficient, thereby obtaining a face local pose feature. In an embodiment, a fully connected layer may be provided to perform dimension mapping on a feature outputted by the decoder, to obtain an emotion coefficient in a preset dimension. A process thereof is shown in Formula (3):

$$\hat{\beta} = \text{Linear}(\Psi(z + z_{emo}, q_T)) \quad (3)$$

$q_T$ is PE information of audio driving information whose time dimension is T, Linear represents a fully connected layer, that is, a linear layer, and $\Psi$ represents a decoder, $\hat{\beta}$ may be used to represent a face local pose feature.

Based on the foregoing process, the audio driving information and the emotion driving information that are given can be finally reflected in an expression coefficient of the 3D face coefficients.

104. Perform, based on the original face spatial feature and the face local pose feature, face reconstruction processing on the to-be-adjusted object, to generate a target face image frame.

The face local pose feature may reflect the current audio and the emotion-induced change in the face pose, so that face reconstruction processing may be performed on the to-be-adjusted object based on the original face spatial feature and the face local pose feature, thereby generating a target face image frame based on the original face image frame. The performing face reconstruction processing on the to-be-adjusted object provided in this embodiment of this application is actually performing adjustment based on the original face included in the original face image frame, so that drawing does not need to be performed again, thereby improving image generation efficiency. In an embodiment, the target face image frame may be a face image obtained after the face pose in the original face image frame is adjusted based on the audio driving information and the emotion driving information.

In a possible implementation, if updated emotion intensity information is further generated while performing feature interaction processing on the audio driving information and the emotion driving information, to obtain the face local pose feature corresponding to the target face image frame, a manner of performing, based on the original face spatial feature and the face local pose feature, face reconstruction processing on the to-be-adjusted object, to generate a target face image frame may be:

performing, based on the original face spatial feature, the face local pose feature, and the updated emotion intensity information, face reconstruction processing on the to-be-adjusted object, to generate the target face image frame.

The original face spatial feature, the face local pose feature, and the updated emotion intensity information may be fused, to obtain a fused face spatial feature. There are a plurality of fusion manners. This is not limited in this embodiment. For example, the fusion manner may be splicing processing or weighted fusion. After the fusion processing, face reconstruction processing is performed on the to-be-adjusted object based on the fused face spatial feature, thereby generating the target face image frame.

In the foregoing manner, it is considered that an emotion usually involves an intense extent and an intense extent of an emotion may be reflected through the updated emotion intensity information, and then impact of an intense extent of an emotion on a face pose is considered when a target face image frame is generated, thereby obtaining a more real and accurate target face image frame.

In a possible implementation, a manner of performing, based on the original face spatial feature and the face local pose feature, face reconstruction processing on the to-be-adjusted object, to generate a target face image frame may be:

fusing the original face spatial feature and the face local pose feature, to obtain a fused face spatial feature;

performing, based on the fused face spatial feature, face reconstruction processing on the to-be-adjusted object, to obtain a reference face image frame corresponding to the to-be-adjusted object; and

generating the target face image frame based on the original face image frame, the fused face spatial feature, and the reference face image frame.

The face local pose feature contains partial face pose information in a to-be-generated target face image frame. For example, the face local pose feature may include related 3D face coefficients such as an expression, a pose, a gaze, and a mouth shape. The original face spatial feature contains face pose information of the original face image frame.

There are a plurality of manners of fusing the original face spatial feature and the face local pose feature. For example, the fusion manner may be splicing processing or weighted fusion. This is not limited in this embodiment.

The fused face spatial feature obtained through the foregoing manner not only contains a main face feature of the target object, but also contains detail information of an expression of the human face, to help better simulate a corresponding face pose of the target object.

In a possible implementation, a manner of performing, based on the fused face spatial feature, face reconstruction processing on the to-be-adjusted object, to obtain a reference face image frame corresponding to the to-be-adjusted object may be:

performing, based on the fused face spatial feature, face reconstruction processing on the to-be-adjusted object, to obtain a reconstructed 3D face image corresponding to the to-be-adjusted object; and

performing rendering and mapping processing on the reconstructed 3D face image, to obtain the reference face image frame corresponding to the to-be-adjusted object.

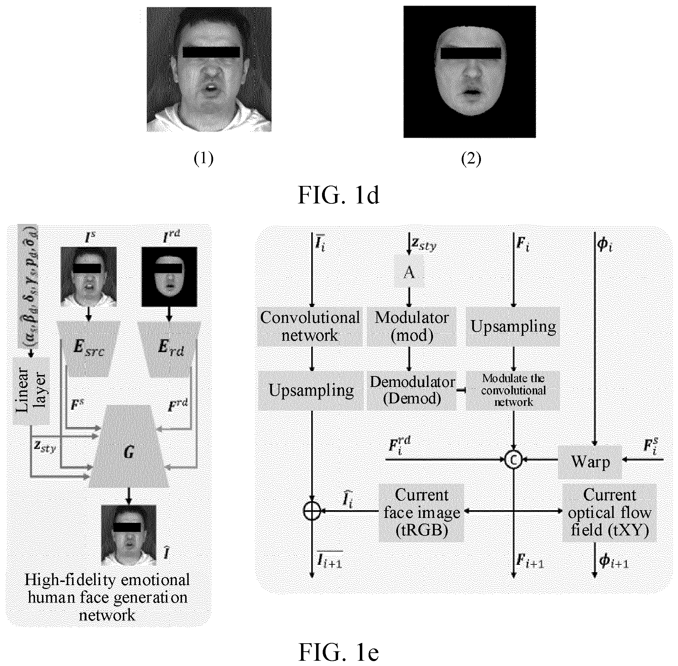

Face reconstruction processing may be performed on the to-be-adjusted object based on the fused face spatial feature through a 3DMM (3D Morphable Model) model or the like, to obtain a reconstructed 3D face image. The face reconstruction processing is 3D reconstruction. In 3D reconstruction, an input two-dimensional face image may be represented using a 3D mesh, and the 3D mesh may contain coordinates and colors of vertexes of a 3D net structure. In this embodiment, the 3D mesh (that is, the reconstructed 3D face image) may alternatively be projected onto a two-dimensional plane in a rendering manner, as shown in FIG. 1d. In FIG. 1d, a diagram identified by (1) is an original face image, and a diagram identified by (2) shows an effect of projecting the original face image onto a two-dimensional plane.

Texture and lighting of the reconstructed 3D face image may come from the original face image frame, a pose and an expression of the reconstructed 3D face image may come from the audio driving information and the emotion driving information, the 3D image may be projected onto a two-dimensional plane by performing rendering and mapping processing on the reconstructed 3D face image, to obtain a reference face image frame corresponding to the to-be-adjusted object.

In a possible implementation, the fused face spatial feature may contain a geometry feature and a texture feature of the to-be-adjusted object, and the reconstructed 3D face image may be constructed according to the geometry feature and the texture feature. The geometry feature may be understood as coordinate information of a key point of the 3D net structure of the to-be-adjusted object, and the texture feature may be understood as a feature indicating texture information of the to-be-adjusted object. There are a plurality of manners of performing, face reconstruction processing based on the fused face spatial feature, to obtain a reconstructed 3D face image corresponding to the to-be-adjusted object. For example, position information of at least one face key point may be extracted from the fused face spatial feature, the position information of the face key point is transformed into a geometry feature, and a texture feature of the to-be-adjusted object is extracted from the fused face spatial feature.

After the geometry feature and the texture feature are obtained through transform, a 3D object model of the to-be-adjusted object, that is, the reconstructed 3D face image in the foregoing embodiments may be constructed, and the 3D object model is projected onto a two-dimensional plane, to obtain a reference face image frame. There are a plurality of manners of obtaining the reference face image frame. For example, 3D model parameters of the to-be-adjusted object may be determined according to the geometry feature and the texture feature, a 3D object model of the to-be-adjusted object is constructed based on the 3D model parameters, and the 3D object model is projected onto a two-dimensional plane, to obtain the reference face image frame.

In a possible implementation, a manner of generating the target face image frame based on the original face image frame, the fused face spatial feature, and the reference face image frame may be:

performing multi-scale feature extraction on the original face image frame, to obtain original face feature images corresponding to the original face image frame on a plurality of scales;

performing multi-scale feature extraction on the reference face image frame, to obtain reference face feature images corresponding to the reference face image frame on a plurality of scales;

encoding and mapping the fused face spatial feature, to obtain latent feature information corresponding to the fused face spatial feature; and

fusing the original face feature images on the plurality of scales, the reference face feature images on the plurality of scales, and the latent feature information, to obtain the target face image frame.

A spatial feature of the original face image frame or the reference face image frame with each preset resolution may be obtained through multi-scale feature extraction, different resolutions correspond to different image scales of original face feature images, and similarly, different resolutions correspond to different image scales of reference face feature images. In this embodiment, an original spatial feature of the original face image frame and a reference spatial feature of the reference face image frame may be obtained through multi-scale extraction, the original spatial feature contains original face feature images on a plurality of scales, and the reference spatial feature contains reference face feature images on a plurality of scales, so that each of the original spatial feature of the original face image frame and the reference spatial feature of the reference face image frame is a multi-layer spatial feature.

There are a plurality of manners of extracting original face feature images on a plurality of scales of the original face image frame, and reference face feature images on a plurality of scales of the reference face image frame. The manners are as follows:
For example, spatial encoding may be performed on the original face image frame and the reference face image frame with each preset resolution using an encoding network (denoted as Enc Block) of a trained image generation model, and therefore an original face feature image and a reference face feature image with each resolution may be obtained.

The encoding network (Enc Block) may include a plurality of encoding sub-networks, each encoding sub-network corresponds to one preset resolution, the encoding sub-networks may be sorted sequentially in ascending order according to magnitudes of resolutions, thereby obtaining the encoding network. When the original face image frame and the reference face image frame are input to the encoding network for network encoding, each encoding sub-network may output a spatial feature corresponding to one preset resolution. Encoding networks for the original face image frame and the reference face image frame may be the same or different, but different encoding networks share network parameters. The encoding sub-network may have a plurality of structures. For example, the encoding sub-network may be formed by a simple single-layer convolutional network, or may have another encoding network structure. The preset resolution may be set according to actual application. For example, the resolution may range from 4*4 to 512*512.

The latent feature information is an intermediate feature w obtained by encoding and mapping the fused face spatial feature, and different elements of the intermediate feature w control different visual features, thereby reducing a relationship between features (decoupling and feature separation). The encoding and mapping process may be extracting deep relationships hidden under a surface feature from the fused face spatial feature, and a latent feature (latent code) may be obtained by decoupling the relationships. There may be a plurality of manners of mapping the fused face spatial feature to the latent feature information using the trained image generation model. For example, the fused face spatial feature may be mapped to the latent feature information (w) using a mapping network ($\mathcal{F}_{mlp}$) of the trained image generation model.

A spatial feature of the original face image frame or the reference face image frame with each preset resolution can be obtained through multi-scale feature extraction, and different resolutions correspond to different image scales of original face feature images. A low-level feature has a high resolution, and contains more detail information; a high-level feature has strong semantic information. A face image frame is constructed with reference to original face feature images and reference face feature images on scales. In this way, a representation capability of a feature may be improved, thereby improving generation efficiency and accuracy of the target face image frame. In addition, the dimension of the fused face spatial feature may be reduced through encoding and mapping processing, thereby reducing a calculation amount in a subsequent generation process of the target face image frame, and improving generation efficiency of the target face image frame.

In a possible implementation, a manner of fusing the original face feature images on the plurality of scales, the reference face feature images on the plurality of scales, and the latent feature information, to obtain the target face image frame may be:

fusing the latent feature information, an original face feature image on a target scale, and a reference face feature image on the target scale, to obtain a corresponding fused face feature image on the target scale, where the target scale is a scale selected from the plurality of scales; and

fusing the corresponding fused face feature image on the target scale, an original face feature image on an adjacent scale, and a reference face feature image on the adjacent scale, to obtain the target face image frame.

In a possible implementation, a manner of fusing the corresponding fused face feature image on the target scale, an original face feature image on an adjacent scale, and a reference face feature image on the adjacent scale, to obtain the target face image frame may be:

performing, based on the latent feature information, style modulation processing on the corresponding fused face feature image on the target scale, to obtain a modulated style feature; and

fusing the modulated style feature, the original face feature image on the adjacent scale, and the reference face feature image on the adjacent scale, to obtain the target face image frame.

The adjacent scale may be a scale larger than the target scale among the plurality of scales. In a case that the plurality of scales contain 4*4, 8*8, 16* 16, 32*32, and 64*64, if the target scale is 16*16, the adjacent scale may be 32*32; if the target scale is 4*4, the adjacent scale may be 8*8.

In this embodiment, a preset basic style feature may be adjusted based on the latent feature information, to obtain a modulated style feature. The preset basic style feature may be understood as a style feature in a constant tensor (Const) that is set in advance in a process of performing image driving. The so-called style feature may be understood as feature information configured for generating an image of a predetermined style.

There are a plurality of manners of style modulation processing. For example, a size of a basic style feature is adjusted, to obtain an initial style feature, modulation processing is performed on the latent feature information, to obtain a convolutional weight corresponding to the initial style feature, and the initial style feature is adjusted based on the convolutional weight, to obtain a modulated style feature.

The convolutional weight may be understood as weight information in a case of performing convolution processing on the initial style feature. There may be a plurality of manners of performing modulation processing on the latent feature information. For example, a basic convolutional weight may be obtained, and the convolutional weight is adjusted based on the latent feature information, thereby obtaining a convolutional feature corresponding to the initial style feature. The adjusting the convolutional weight based on the latent feature information may be implemented mainly using a Mod module and a Demod module in a decoding network of stylegan v2 (a style migration model).

After modulation processing is performed on the latent feature information, the initial style feature may be adjusted based on the convolutional weight obtained after the modulation processing. There may be a plurality of manners of adjustment. For example, a target style convolutional network corresponding to a resolution of a basic face image is selected from style convolutional networks (StyleConv) of the trained image generation model, and the initial style feature is adjusted based on the convolutional weight, to obtain a modulated style feature. The basic face image with the initial resolution is generated based on the preset basic style feature.

In a possible implementation, a manner of fusing the modulated style feature, the original face feature image on the adjacent scale, and the reference face feature image on the adjacent scale, to obtain the target face image frame may be:

fusing the modulated style feature, the original face feature image on the adjacent scale, and the reference face feature image on the adjacent scale, to obtain a fused face feature image on the adjacent scale; and

generating the target face image frame based on the fused face feature image on the adjacent scale and the basic face image.

The fused face feature image may also be considered as a fused style feature.

In a possible implementation, a manner of generating the target face image frame based on the fused face feature image on the adjacent scale and the basic face image may be: using the fused face feature image on the adjacent scale as a fused face feature image on a new target scale, and returning to perform the step of performing, based on the latent feature information, style modulation processing on the corresponding fused face feature image on the target scale, to obtain a modulated style feature, until a scale of an obtained target face image frame satisfies a preset scale condition.

The preset scale condition may be that the scale of the target face image frame is a maximum scale of the plurality of scales.

In this embodiment, there may be a plurality of manners of selecting, based on the preset resolution, a target original spatial feature (that is, an original face of feature image on the target scale) from original spatial features and a target reference spatial feature (that is, a reference face feature image on the target scale) from reference spatial features. For example, original spatial features and reference spatial features may be sorted based on the preset resolution separately. Based on sorting information, an original spatial feature with a minimum resolution is selected from the original spatial features as a target original spatial feature, and a reference spatial feature with a minimum resolution is selected from the reference spatial features as a target reference spatial feature. After the target original spatial feature and the target reference spatial feature are selected, the target original spatial feature may be deleted from the original spatial features, and the target reference spatial feature may be deleted from the reference spatial features. In this way, spatial features with the minimum resolution may be selected from the original spatial features and the reference spatial features each time, thereby obtaining the target original spatial feature and the target reference spatial feature.

After the target original spatial feature and the target reference spatial feature are selected, the modulated style feature, the target original spatial feature, and the target reference spatial feature may be fused. There may be a plurality of manners of fusion. For example, the target original spatial feature, the target reference spatial feature, and the modulated style feature may be directly spliced, thereby obtaining a fused style feature with the current resolution, which may be shown in Formula (4), Formula (5), and Formula (6):

$$F_{i+1} = [\boldsymbol{T}(\phi_i, F_i^s), StyleConv(Up(F_i), z_{sty}), F_i^{rd}] \qquad (4)$$

$$\phi_i = \mathrm{F}_{flow}(F_{i-1}) \qquad (5)$$

$$\widehat{I}_i = \mathrm{F}_{\mathrm{RGB}}(F_{i-1}) \qquad (6)$$

$z_{sty}$ represents the fused face spatial feature, StyleConv represents a style convolution module in stylegan v2, Up represents up-sampling, T represents a feature resampling operation, $\mathrm{F}_{flow}$ has a function of transforming a feature into a dense flow field $\Phi_i$, and $\mathrm{F}_{\mathrm{RGB}}$ has a function of transforming a feature into an RGB color image $\widehat{I}_i$. $F_{i+1}$ is a fused style feature, the fused style feature may be a style feature corresponding to a next preset resolution of the basic style feature, $F_i$ is the basic style feature, $F_i^s$ is the target original spatial feature with the preset resolution, and $F_i^{rd}$ is the target reference spatial feature with the preset resolution.

After the fused style feature with the current resolution is obtained, the target face image frame with the target resolution may be generated based on the fused style feature and the basic face image. There may be a plurality of manners of generating the target face image frame with the target resolution. For example, a current face image may be generated based on the fused style feature, and the current face image and the basic face image are fused, to obtain a fused face image with the current resolution; and the fused style feature is used as the preset basic style feature, and the fused face image is used as the basic face image, to return to perform the step of adjusting a preset basic style feature based on the latent feature information, until the current resolution is the target resolution, to obtain the target face image frame.

In the process of generating the target face image frame with the target resolution, it may be found that the current face image and the basic face image with different resolutions are superimposed sequentially. In addition, during superimposition, the resolutions are sequentially increased, and therefore a high-definition target face image frame may be output.

In a possible implementation, a basic optical flow field with an initial resolution may alternatively be generated based on the basic style feature, thereby outputting a target optical flow field with the target resolution. The basic optical flow field may be understood as a visualized field configured to indicate the same key point movement in a face image with the initial resolution. There may be a plurality of manners of outputting the target optical flow field. For example, a basic optical flow field with an initial resolution may be generated based on the basic style feature, and the modulated style feature, the original spatial feature, and the reference spatial feature are fused according to the basic optical flow field, to obtain a target optical flow field with the target resolution.

There may be a plurality of manners of fusing the modulated style feature, the original spatial feature, and the reference spatial feature. For example, based on the preset resolution, a target original spatial feature may be selected from original spatial features and a target reference spatial feature may be selected from reference spatial features; the modulated style feature and the target style feature are fused, to obtain a fused style feature with the current resolution; and a target optical flow field with the target resolution is generated based on the fused style feature and the basic optical flow field.

There may be a plurality of manners of generating a target optical flow field with the target resolution based on the fused style feature and the basic optical flow field. For example, a current optical flow field may be generated based on the fused style feature, and the current optical flow field and the basic optical flow field are fused, to obtain a fused optical flow field with the current resolution; and the fused style feature is used as the preset basic style feature, and the fused optical flow field is used as the basic optical flow field, to return to perform the step of adjusting a preset basic style feature based on the latent feature information, until the current resolution is the target resolution, to obtain the target optical flow field.

The target face image and the target optical flow field may be simultaneously generated based on the preset basic style feature, or the target face image or the target optical flow field may be individually generated based on the preset style feature. Using an example in which the target face image and the target optical flow field are simultaneously generated, the preset basic style feature, the basic face image, and the basic optical flow field may be processed through a decoding network of the trained image generation model, each decoding network may include a decoding sub-network corresponding to each preset resolution, resolutions may increase from 4*4 to 512*512, and a network structure of a decoding sub-network may be shown in FIG. 1e. A fused style feature ($F_i$), a fused face image ($\widehat{I}_i$), and a fused optical flow field ($\phi_i$) that are outputted by a previous decoding sub-network are received, modulation processing is performed on the latent feature information w, to obtain a convolutional weight corresponding to $F_i$, and convolution processing is performed on $F_i$ based on the convolutional weight, to obtain a modulated style feature (denoted as $\mathcal{F}_{inter}^i$). Based on a resolution corresponding to a decoding sub-network, a target original spatial feature ($Ff$) corresponding to the decoding sub-network is select from original spatial features, and a target reference spatial feature ($F_i^{rd}$) corresponding to the decoding sub-network is selected from reference spatial features, where $F_i$, $F_i^s$, and $F_i^{rd}$ have the same spatial resolution. $\mathcal{F}_{inter}^i$, $Ff$, and $F_i^{rd}$ are connected in series, thereby obtaining a fused style feature ($F_{i+1}$) outputted by the decoding sub-network. Then, a current face image and a current optical flow field are generated based on $F_{i+1}$. In addition, the current face image and $\overline{I}^l$ outputted by the previous decoding sub-network are fused, to obtain a fused face image $\overline{I}^{l+1}$ outputted by the current decoding sub-network, and the current optical flow field and the fused optical flow field ($\phi_i$) outputted by the previous decoding sub-network are fused, to obtain a fused optical flow field ($\phi_{i+1}$) outputted by the current decoding sub-network. Then, the fused face image and the fused optical flow field are output to a next decoding sub-network, until a decoding sub-network corresponding to the target resolution outputs a fused face image and a fused optical flow field. In this case, the fused face image with the target resolution (which is a resolution 512) may be used as the target face image frame, and the fused optical flow field with the target resolution may be used as the target optical flow field.

For an operation of each layer in the network in the foregoing image generation process, reference may be made to FIG. 1e. On a left side in FIG. 1e, a schematic framework diagram of a high-fidelity emotional human face generation network is shown. Through the emotional human face generation network, the target face image frame may be generated based on the original face image frame $I^s$, the fused face spatial feature, and the reference face image frame $I^{rd}$. On a right side, a diagram of details of each layer in a network module G in the emotional human face generation network is shown. Through the network module G, the target face image frame $\hat{I}$ may be generated based on an original face feature image $F^s$ on each scale, a reference face feature image $F^{rd}$ on each scale, and the fused face spatial feature $z_{sty}$.

The generation network may be established based on StyleGAN2. In a possible implementation, an original face spatial feature (denoted as $\theta$) of a source human face (that is, the original face image frame) and a face local pose feature (denoted as $\hat{\beta}$) of a driven human face (that is, the target face image frame) may be recombined first. For example, object identity information ($\alpha_s$), lighting ($\delta_s$), and texture ($\gamma_s$) in the original face spatial feature $\theta$ of the source human face, an expression coefficient ($\widehat{\beta_d}$) and a pose ($p_d$) in the face local pose feature $\hat{\beta}$, and updated emotion intensity information ($\widehat{\sigma_d}$) may be merged into one new feature vector ($z_{sty}$). The feature vector is the fused face spatial feature in the foregoing embodiments, the feature vector contains expression and pose information of the driven human face, and emotion information in the feature vector is further enhanced using an emotion intensity representation outputted by the transformer encoder. The process of obtaining the fused face spatial feature is shown in Formula (7):

$$z_{sty} = \text{Linear}([\alpha_s, \widehat{\beta_d}, \delta_s, \gamma_s, p_d, \widehat{\sigma_d}]) \qquad (7)$$

Linear represents a linear layer.

In addition, an encoder ($E_{src}$) of the source human face may be constructed to provide a texture cue ($F^s$) of the source human face and an encoder ($E_{rd}$) of the driven human face may be rendered to explicitly provide a spatial cue ($F^{rd}$) of the driven human face, which mainly includes information such as a pose and an expression.

Then, $z_{sty}$, $F^s$, and $F^{rd}$ are input to the network G, and processed by each layer in the network G, to finally generate a high-fidelity human face, that is, the target face image frame in the foregoing embodiments.

The process of training the emotional human face generation network may be as follows:

obtaining training data, where the training data includes an original face image frame sample of a sample object, a target driving face image frame sample, and an audio driving information sample and an emotion driving information sample that correspond to the target driving face image frame sample;

performing spatial feature extraction on the original face image frame sample, to obtain an original face spatial feature corresponding to the original face image frame sample;

performing feature interaction processing on the audio driving information sample and the emotion driving information sample, to obtain a face local pose sample feature corresponding to the target driving face image frame sample;

performing, based on the original face spatial feature and the face local pose sample feature, face reconstruction processing on the sample object, to obtain a predicted driving face image frame through a preset emotional human face generation network; and

adjusting, based on the target driving face image frame sample and the predicted driving face image frame, parameters of the preset emotional human face generation network, to obtain a trained emotional human face generation network.

In an embodiment, the emotional human face generation network may be trained using four loss functions, and the four loss functions are respectively: emotion consistency loss (denoted as $L_{emo}$), pixel-level image reconstruction loss (denoted as $L_{rec}$), feature-level perception loss (denoted as $L_p$), and adversarial loss (denoted as $L_{gan}$). In a possible implementation, the four loss functions may be fused (for example, undergo a weighting operation), to obtain a total loss function, and then parameters of the emotional human face generation network are adjusted based on the total loss function, until the total loss function satisfies a preset loss condition, thereby obtaining a trained emotional human face generation network, where the preset loss condition may be that the total loss function is less than a preset loss value.

In some embodiments, the total loss function L may be shown in Formula (8):

$$L = L_{emo} + L_{rec} + L_p + L_{gan} \qquad (8)$$

For the emotion consistency loss $L_{emo}$, emotion recognition processing may be performed on the target driving face image frame sample and the sample object in the predicted driving face image frame separately, to obtain a first emotion recognition result corresponding to the target driving face image frame sample and a second emotion recognition result corresponding to the predicted driving face image frame; and calculation is performed based on the first emotion recognition result and the second emotion recognition result, to obtain an emotion consistency loss of the preset emotional human face generation network.

For the image reconstruction loss $L_{rec}$, the image reconstruction loss of the preset emotional human face generation network may be determined based on a similarity between the target driving face image frame sample and the predicted driving face image frame. The similarity may be a cosine similarity or may be a histogram similarity measure. This is not limited in this embodiment.

The perception loss $L_p$ is a feature-level loss value. In an embodiment, spatial feature extraction is performed on each of the target driving face image frame sample and the predicted driving face image frame, to obtain a first face spatial feature of the target driving face image frame sample and a second face spatial feature of the predicted driving face image frame, and then a similarity between the first face spatial feature and the second face spatial feature is calculated, to obtain a perception loss. A larger similarity indicates a smaller perception loss; otherwise, a smaller similarity indicates a larger perception loss.

For the adversarial loss $L_{gan}$, probabilities that the target driving face image frame sample and the predicted driving face image frame belong to a real driving face image frame may be separately predicted, and the adversarial loss of the preset emotional human face generation network is determined based on the probabilities.

In this embodiment, a manner of separately predicting probabilities that the target driving face image frame sample and the predicted driving face image frame belong to a real driving face image frame, and determining the adversarial loss of the preset emotional human face generation network based on the probabilities may be:

predicting, through a preset discrimination model, first probability information that the target driving face image frame sample belongs to a real driving face image frame;

predicting, through the preset discrimination model, second probability information that the predicted driving face image frame belongs to a real driving face image frame; and

determining, based on the first probability information and the second probability information, adversarial loss information of the preset emotional human face generation network.

The emotional human face generation network may be a generative adversarial network. The generative adversarial network contains one generator and one discriminator. The generator is responsible for generating a sample, and the discriminator is responsible for discriminating whether the sample generated by the generator is true. The generator needs to generate an as real as possible sample to confuse the discriminator, and the discriminator needs to distinguish the sample generated by the generator and a real sample as much as possible, to improve capabilities of the generator through a continuous adversarial game between the two.

The preset discrimination model may be the discriminator D. During training, the target driving face image frame sample is a real image, the predicted driving face image frame is a generation result of the preset emotional human face generation network, and the discriminator needs to determine that the generation result is false and the real image is true. The preset emotional human face generation network may be considered as the entire generator G. During training and learning, an image generated by the generator G needs to be capable of fooling the discriminator D. That is to say, the discriminator D determines that the probability that the predicted driving face image frame generated by the generator G belongs to a real driving face image frame is 1 as much as possible.

Input of the discriminator is a real image or output of the emotional human face generation network, aiming to distinguish the output of the emotional human face generation network from the real image as much as possible. The emotional human face generation network needs to fool the discriminator as much as possible. The emotional human face generation network and the discriminator oppose each other, and continuously adjust parameters, thereby obtaining a trained emotional human face generation network.

In a possible implementation, a manner of performing spatial feature extraction on the original face image frame, to obtain an original face spatial feature corresponding to the original face image frame may be:

performing spatial feature extraction on the original face image frame through an image generation model, to obtain the original face spatial feature corresponding to the original face image frame;

a manner of performing feature interaction processing on the audio driving information and the emotion driving information, to obtain the face local pose feature corresponding to the target face image frame may be:

performing feature interaction processing on the audio driving information and the emotion driving information through the image generation model, to obtain the face local pose feature corresponding to the target face image frame; and

a manner of performing, based on the original face spatial feature and the face local pose feature, face reconstruction processing on the to-be-adjusted object, to generate a target face image frame may be:
performing, based on the original face spatial feature and the face local pose feature, face reconstruction processing on the to-be-adjusted object through the image generation model, to generate the target face image frame.

The image generation model may be a neural network model, and the neural network may be a visual geometry group network (VGGNet), a residual network (ResNet), a densely connected convolutional network (DenseNet), or the like. However, it is to be understood that, the image generation model of this embodiment is not merely limited to the several types listed above.

The image generation model may be formed by training a plurality of groups of training data, and the image generation model may be trained by another device and then provided to the image generation apparatus, or may be trained by the image generation apparatus autonomously.

If the image generation model is trained by the image generation apparatus autonomously, before the performing spatial feature extraction on the original face image frame through the image generation model, to obtain the original face spatial feature corresponding to the original face image frame, the image generation method may further include:

obtaining training data, where the training data includes an original face image frame sample of a sample object, a target driving face image frame sample, and an audio driving information sample and an emotion driving information sample that correspond to the target driving face image frame sample;

performing spatial feature extraction on the original face image frame sample through a preset image generation model, to obtain the original face spatial feature corresponding to the original face image frame sample;

performing feature interaction processing on the audio driving information sample and the emotion driving information sample, to obtain a face local pose sample feature corresponding to the target driving face image frame sample;

performing, based on the original face spatial feature and the face local pose sample feature, face reconstruction processing on the sample object, to obtain a predicted driving face image frame; and

adjusting, based on the target driving face image frame sample and the predicted driving face image frame, parameters of the preset image generation model, to obtain a trained image generation model.

The target driving face image frame sample may be considered as label information, and may be an expected driving face image frame corresponding to the audio driving information sample and the emotion driving information sample.

There are a plurality of manners of obtaining an original face image frame sample of a sample object, a target driving face image frame sample, and an audio driving information sample and an emotion driving information sample that correspond to the target driving face image frame sample. This is not limited in this embodiment.

For example, the model may be trained using a lecturer video with an emotion label. For example, any two video frames containing the object face may be extracted from a lecture video about the sample object, where one frame is used as the original face image frame sample, and the other frame is used as the target driving face image frame sample. Audio information corresponding to the target driving face image frame sample in 1 second before and after the lecture video is used as the audio driving information sample, and the emotion label of the lecture video is used as the emotion driving information sample.

For another example, any consecutive 32 frames may be captured from the lecture video and used as driving images (that is, target driving face image frame samples, denoted as $I_{1-32}$), which is also a supervised real value of a model generation result, where the first frame $I_1$ may be used as an original image (that is, the original face image frame sample), audio signals corresponding to consecutive driving images are used as audio driving information samples ($A_{1-32}$), and a text representation ($t_{emo}$) of the emotion label of the video is used as emotion driving information for generating a human face.

In a possible implementation, a manner of adjusting, based on the target driving face image frame sample and the predicted driving face image frame, parameters of the preset image generation model, to obtain a trained image generation model may be:

performing emotion recognition processing on the target driving face image frame sample, to obtain a first emotion recognition result corresponding to the target driving face image frame sample, and performing emotion recognition processing on the sample object in the predicted driving face image frame, to obtain a second emotion recognition result corresponding to the predicted driving face image frame;

calculating, based on the first emotion recognition result and the second emotion recognition result, emotion loss information of the preset image generation model;

determining, based on a similarity between the target driving face image frame sample and the predicted driving face image frame, reconstruction loss information of the preset image generation model; and

adjusting the parameters of the preset image generation model according to the emotion loss information and the reconstruction loss information, to obtain the trained image generation model.

Emotion recognition processing may be performed separately on the sample objects in the target driving face image frame sample and the predicted driving face image frame through an emotion recognition model, and the emotion recognition model may be a neural network model.

The first emotion recognition result may be first probability information that an emotion of the sample object in the target driving face image frame sample belongs to a preset emotion. The second emotion recognition result may be second probability information that an emotion of the sample object in the predicted driving face image frame belongs to a preset emotion. Then, the emotion loss information is obtained according to a cross entropy loss between the first probability information and the second probability information.

In a possible implementation, a manner of determining, based on a similarity between the target driving face image frame sample and the predicted driving face image frame, reconstruction loss information of the preset image generation model may be:

performing feature extraction on the target driving face image frame sample, to obtain first feature information corresponding to the target driving face image frame sample;

performing feature extraction on the predicted driving face image frame, to obtain second feature information corresponding to the predicted driving face image frame; and

determining the reconstruction loss information of the preset image generation model according to a similarity between the first feature information and the second feature information.

A vector distance between a feature vector corresponding to the first feature information and a feature vector corresponding to the second feature information may be calculated, and the similarity between the first feature information and the second feature information is determined according to the vector distance. A larger vector distance indicates a lower similarity, and a larger loss value corresponding to the reconstruction loss information; otherwise, a smaller vector distance indicates a higher similarity, and a smaller loss value corresponding to the reconstruction loss information.

In a possible implementation, a manner of adjusting the parameters of the preset image generation model according to the emotion loss information and the reconstruction loss information, to obtain the trained image generation model may be:

performing spatial feature extraction on the target driving face image frame sample, to obtain a target face spatial feature corresponding to the target driving face image frame sample;

performing face key point extraction on the target face spatial feature, to obtain a first face key point corresponding to the target face spatial feature, and performing face key point extraction on the face local pose sample feature, to obtain a second face key point corresponding to the face local pose sample feature;

determining face key point loss information based on the first face key point and the second face key point;

determining, based on a feature distance between the face local pose sample feature and the target face spatial feature, regularization loss information of the preset image generation model; and

adjusting the parameters of the preset image generation model according to the emotion loss information, the reconstruction loss information, the face key point loss information, and the regularization loss information, to obtain the trained image generation model.

The performing spatial feature extraction on the target driving face image frame sample may be performing convolution processing, pooling processing, and the like on the target driving face image frame sample. This is not limited in this embodiment. In this embodiment, spatial feature extraction may be performed on the target driving face image frame sample through a trained image feature extraction network.

The extracted target face spatial feature corresponding to the target driving face image frame sample may include 3D face coefficients corresponding to the target driving face image frame sample, for example, may include identity information, lighting, texture, expression, pose, and gaze.

In an embodiment, the face key point extraction may be to extract a key point of one of five sense organs such as an eye or a mouth.

For the regularization loss information, in this embodiment, the target face spatial feature corresponding to the target driving face image frame sample may be used as a supervisory signal of the extracted face local pose feature. In a possible implementation, in this embodiment, a feature distance between the face local pose sample feature corresponding to the target driving face image frame sample and the target face spatial feature may be calculated, and regularization loss information is determined according to the feature distance. A larger feature distance indicates a larger loss value corresponding to the regularization loss information; otherwise, a smaller feature distance indicates a smaller loss value corresponding to the regularization loss information.

A manner of adjusting the parameters of the preset image generation model according to the emotion loss information, the reconstruction loss information, the face key point loss information, and the regularization loss information, to obtain the trained image generation model may be:

fusing the emotion loss information, the reconstruction loss information, the face key point loss information, and the regularization loss information, to obtain total loss information; and

adjusting the parameters of the preset image generation model according to the total loss information, to obtain the trained image generation model.

There are a plurality of manners of fusing the emotion loss information, the reconstruction loss information, the face key point loss information, and the regularization loss information. This is not limited in this embodiment. For example, the fusion manner may be weighted fusion.

In the process of training the preset image generation model, total loss information is first calculated, then parameters of the preset image generation model are adjusted using a back-propagation algorithm, and parameters of the image generation model are optimized based on the total loss information, so that a loss value corresponding to the total loss information is less than the preset loss value, to obtain a trained image generation model. The preset loss value may be set according to an actual situation. For example, if a precision requirement for the image generation model is higher, the preset loss value is smaller.

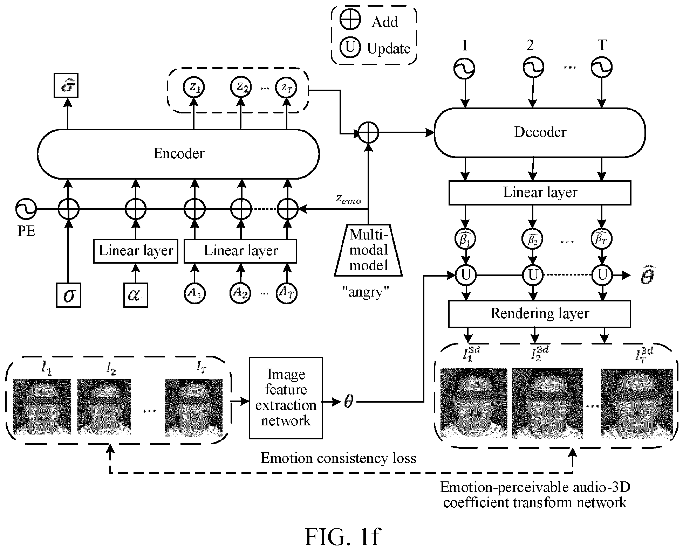

In an embodiment, the image generation model may include an emotion-perceivable audio-3D coefficient transform network and an emotional human face generation network. As shown in FIG. 1f, a network structure of the emotion-perceivable audio-3D coefficient transform network is shown. Through the image generation model, face pose adjustment may be performed on the original face image frame of the to-be-adjusted object based on the audio driving information and the emotion driving information, to drive generation of a corresponding target face image frame. For example, the source human face (that is, the original face image frame) may be input to an image feature extraction network in the emotion-perceivable audio-3D coefficient transform network, to obtain an original face spatial feature corresponding to the original face image frame, denoted as $\theta$, $\theta$ may contain 3D face coefficients such as object identity information $\alpha$, lighting, a texture, an expression, a pose, and a gaze, and some 3D face coefficients (for example, the expression, the pose, and the gaze) in $\theta$ may be denoted as $\beta$.

Then, feature interaction processing may be performed on the audio driving information and the emotion driving information, to obtain a face local pose feature, denoted as $\hat{\beta}$. A process thereof may include: extracting an emotion semantic feature (denoted as $z_{emo}$) contained in the emotion driving information (which may be, for example, description information such as "angry") and extracting object identity information $\alpha$ from the original face spatial feature $\theta$ through a multi-modal model, and performing dimension mapping on an audio driving sequence ($A_1$, $A_2$, ..., and $A_T$) and the object identity information $\alpha$ through a linear layer; then inputting PE information PE of the audio driving information, the preset emotion intensity information $\sigma$, the emotion semantic feature $z_{emo}$, the dimension-mapped audio driving sequence $A_{1-32}$, and the object identity information $\alpha$ to the encoder for feature interaction, to obtain interaction feature information $z$ ($z$ may include a feature sequence $z_1$, $z_2$, ..., and $z_T$) and updated emotion intensity information $\hat{\sigma}$; and then inputting the interaction feature information $z$, the emotion semantic feature $z_{emo}$, and the PE information of the audio driving information to the decoder, and processing an output result of the decoder through the linear layer, to obtain the face local pose feature $\hat{\beta}$, where $\hat{\beta}$ may include coefficients $\widehat{\beta_1}$, $\widehat{\beta_2}$, ..., and $\widehat{\beta_T}$.

After the face local pose feature is obtained, the original face spatial feature and the face local pose feature may be fused, and $\beta$ in the original face spatial feature $\theta$ may be replaced with $\hat{\beta}$, to obtain updated $\hat{\theta}$. Coefficients in $\beta$ and $\hat{\beta}$ correspond to each other. In addition, the updated emotion intensity information and $\hat{\theta}$ may be further fused, to obtain the fused face spatial feature. Then, face reconstruction processing is performed on the to-be-adjusted object based on the fused face spatial feature, to obtain a reconstructed 3D face image corresponding to the to-be-adjusted object; and rendering and mapping processing is performed on the reconstructed 3D face image through a rendering layer, to obtain a two-dimensional image of a driven emotional human face, that is, the reference face image frame corresponding to the to-be-adjusted object. Finally, the reference face image frame, the source human face, and the recombined coefficient (which is the fused face spatial feature) are input to the emotional human face generation network, to obtain a final real human face.

In the process of training the emotion-perceivable audio-3D coefficient transform network, the target driving face image frame sample corresponding to the sample object may be denoted as I, and the reference face image frame sample obtained through the rendering layer is denoted as $I^{rd}$. In this embodiment, the rendered human face $I^{rd}$ may be stuck back onto the original face image frame sample through face masking, to form a new human face image, denoted as $I^{3d}$, $I^{3d}$ and a real value image I are input to the emotion recognition model for emotion recognition processing, and emotion loss information (that is, emotion consistency loss) of the network is calculated based on an emotion recognition result, as shown in Formula (9) below:

$$L_{emo} = \left\| \varphi_{emo}(I^{3d}) - \varphi_{emo}(I) \right\|_2 \quad (9)$$

$\varphi_{emo}$ represents the emotion recognition model, and $L_{emo}$ represents the emotion consistency loss.

In addition, a face reconstruction loss of the emotion-perceivable audio-3D coefficient transform network may be further calculated based on the real value image I and the rendered human face $I^{rd}$, as shown in Formula (10):

$$L_{rec} = \left\| I^{rd} - M \odot I \right\|_1 \quad (10)$$

M represents the masking, and $L_{rec}$ represents the face reconstruction loss.

In some embodiments, original 68 face key points (denoted as I) may be extracted from the 3D face coefficients of the target driving face image frame sample, and face key points (denoted as $I^{rd}$) may be extracted from the recombined 3D face coefficients, to calculate a face key point loss between the two, as shown in Formula (11):

$$L_{lmd} = \left\| I - I^{rd} \right\|_2 \quad (11)$$

$L_{lmd}$ represents the face key point loss.

In some embodiments, a coefficient regularization loss of the emotion-perceivable audio-3D coefficient transform network may be further calculated, and a coefficient regularization term may be used to stabilize a training process. By calculating a loss value between a 3D face coefficient ($\beta$) outputted by the image feature extraction network and a 3D face coefficient ($\hat{\beta}$) predicted by the decoder, a coefficient regularization loss $L_{reg}$ may be obtained, as shown in Formula (12):

$$L_{reg} = \left\| \beta - \hat{\beta} \right\|_2 \quad (12)$$

After the emotion consistency loss, the face reconstruction loss, the face key point loss, and the coefficient regularization loss are obtained, a total loss function of the emotion-perceivable audio-3D coefficient transform network may be calculated based on the four loss functions, and then the emotion-perceivable audio-3D coefficient transform network is trained based on the total loss function. The total loss function L may be shown in Formula (13):

$$L = L_{emo} + L_{rec} + L_{lmd} + L_{reg} \quad (13)$$

Based on the image generation method provided in this application, motion of a face in any original face image frame may be flexibly driven according to given audio and emotion description, to generate a target face image frame in which a mouth shape is consistent with audio content, and a face emotion is consistent with the emotion description. The emotion description herein may be a hybrid emotion or the like. This is not limited in this embodiment. This solution may implement emotional voice figure driving, and any emotion and audio are reflected on any human face, to implement multi-modal emotional human face driving and provide a solution with extremely strong operability.

The emotional voice figure driving is that a face expression of a figure is further controlled according to an external given emotion condition or an emotion representation decouple from audio, to be consistent with an expected emotional expression.

It can be learned from the foregoing that, in this embodiment, an original face image frame, audio driving information, and emotion driving information of a to-be-adjusted object may be obtained, the original face image frame including an original face of the to-be-adjusted object, the audio driving information including voice content for the to-be-adjusted object, to drive a face pose of the original face to change according to the voice content, and the emotion driving information indicating a target emotion of the to-be-adjusted object when issuing the voice content, to drive the face pose of the original face to change according to the target emotion; and spatial feature extraction is performed on the original face image frame, to obtain an original face spatial feature corresponding to the original face image frame. Feature interaction processing is performed on the audio driving information and the emotion driving information, to obtain a face local pose feature of the to-be-adjusted object, and the face local pose feature may reflect the current voice content and the emotion-induced change in the face pose, so that face reconstruction processing is performed on the to-be-adjusted object based on the original face spatial feature and the face local pose feature, thereby generating a target face image frame based on the original face image frame. In this application, partial face pose detail information of the to-be-adjusted object may be captured using the audio driving information and the emotion driving information, and then face adjustment is performed on the original face image frame based on the captured information, thereby obtaining the corresponding target face image frame. In this way, an improvement in generation efficiency and accuracy of the target face image frame is facilitated.

According to the method described in the foregoing embodiments, the following further performs detailed description by using an example in which the image generation apparatus is integrated in a server.

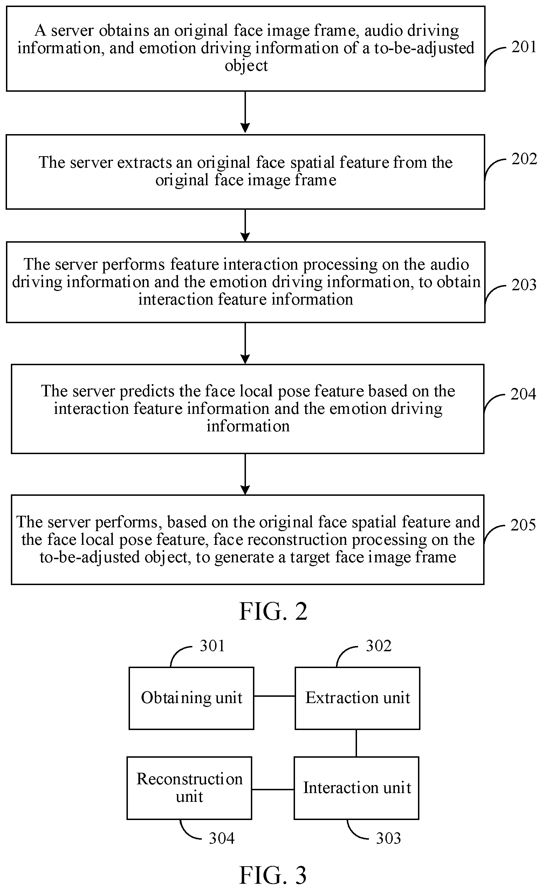

An embodiment of this application provides an image generation method. As shown in FIG. 2, a procedure of the image generation method may be as follows:

201. A server obtains an original face image frame, audio driving information, and emotion driving information of a to-be-adjusted object.

202. The server performs spatial feature extraction on the original face image frame, to obtain an original face spatial feature corresponding to the original face image frame.

203. The server performs feature interaction processing on the audio driving information and the emotion driving information, to obtain interaction feature information.

204. The server predicts the face local pose feature based on the interaction feature information and the emotion driving information.

205. The server performs, based on the original face spatial feature and the face local pose feature, face reconstruction processing on the to-be-adjusted object, to generate a target face image frame.

Based on the image generation method provided in this application, motion of a face in any original face image frame may be flexibly driven according to given audio and emotion description, to generate a target face image frame in which a mouth shape is consistent with audio content, and a face emotion is consistent with the emotion description. The emotion description herein may be a hybrid emotion or the like. This is not limited in this embodiment. This solution may implement emotional voice figure driving, and any emotion and audio are reflected on any human face, to implement multi-modal emotional human face driving and provide a solution with extremely strong operability.

The emotional voice figure driving is that a face expression of a figure is further controlled according to an external given emotion condition or an emotion representation decouple from audio, to be consistent with an expected emotional expression.

It can be learned from the foregoing that, in this embodiment, a server may obtain an original face image frame, audio driving information, and emotion driving information of a to-be-adjusted object; perform spatial feature extraction on the original face image frame, to obtain an original face spatial feature corresponding to the original face image frame; perform feature interaction processing on the audio driving information and the emotion driving information, to obtain interaction feature information; and then predict the face local pose feature based on the interaction feature information and the emotion driving information. The face local pose feature may reflect the current audio and the emotion-induced change in the face pose, so that the server may perform face reconstruction processing on the to-be-adjusted object based on the original face spatial feature and the face local pose feature, thereby generating a target face image frame based on the original face image frame. In this application, partial face pose detail information of the to-be-adjusted object may be captured using the audio driving information and the emotion driving information, and then face adjustment is performed on the original face image frame based on the captured information, thereby obtaining the corresponding target face image frame. In this way, an improvement in generation efficiency and accuracy of the target face image frame is facilitated.

To better implement the foregoing method, an embodiment of this application further provides an image generation apparatus. As shown in FIG. 3, the image generation apparatus may include an obtaining unit 301, an extraction unit 302, an interaction unit 303, and a reconstruction unit 304, which are as follows:

(1) Obtaining unit 301

The obtaining unit is configured to obtain an original face image frame, audio driving information, and emotion driving information of a to-be-adjusted object, the original face image frame including an original face of the to-be-adjusted object, the audio driving information including voice content for the to-be-adjusted object, and being configured to drive a face pose of the original face to change according to the voice content, and the emotion driving information indicating a target emotion of the to-be-adjusted object when issuing the voice content, and being configured to drive the face pose of the original face to change according to the target emotion.

(2) Extraction unit 302

The extraction unit is configured to perform spatial feature extraction on the original face image frame, to obtain an original face spatial feature of the original face image frame.

(3) Interaction unit 303

The interaction unit is configured to perform feature interaction processing on the audio driving information and the emotion driving information, to obtain a face local pose feature of the to-be-adjusted object issuing the voice content with the target emotion.

In some embodiments of this application, the interaction unit may include a feature interaction sub-unit and a prediction sub-unit, which are as follows:

The feature interaction sub-unit is configured to perform feature interaction processing on the audio driving information and the emotion driving information, to obtain interaction feature information; and

the prediction sub-unit is configured to predict the face local pose feature based on the interaction feature information and the emotion driving information.

In some embodiments of this application, the audio driving information includes a plurality of audio frames, and the feature interaction sub-unit may be further configured to: extract object identity information in the original face spatial feature; encode position information of each audio frame of the plurality of audio frames in the audio driving information, to obtain a position code of each audio frame, and combine position codes respectively corresponding to the plurality of audio frames, to obtain PE information corresponding to the audio driving information; and perform feature interaction processing on the object identity information, the PE information, the audio driving information, and the emotion driving information, to obtain the interaction feature information.

In some embodiments of this application, the prediction sub-unit may be further configured to: fuse the interaction feature information and the emotion driving information, to obtain fused feature information; and decode the fused feature information, to obtain the face local pose feature.

(4) Reconstruction unit 304

The reconstruction unit is configured to perform, based on the original face spatial feature and the face local pose feature, face reconstruction processing on the to-be-adjusted object, to generate a target face image frame.

In some embodiments of this application, the interaction unit may include a setting sub-unit and an interaction sub-unit, which are as follows:

The setting sub-unit is configured to obtain preset emotion intensity information corresponding to the emotion driving information;

the interaction sub-unit is configured to perform feature interaction processing on the audio driving information, the emotion driving information, and the preset emotion intensity information, to obtain the face local pose feature and updated emotion intensity information; and

the reconstruction unit may be further configured to perform, based on the original face spatial feature, the face local pose feature, and the updated emotion intensity information, face reconstruction processing on the to-be-adjusted object, to generate the target face image frame.

In some embodiments of this application, the reconstruction unit may include a fusing sub-unit, a reconstruction sub-unit, and a generation sub-unit, which are as follows:

The fusing sub-unit is configured to fuse the original face spatial feature and the face local pose feature, to obtain a fused face spatial feature;

the reconstruction sub-unit is configured to perform, based on the fused face spatial feature, face reconstruction processing on the to-be-adjusted object, to obtain a reference face image frame corresponding to the to-be-adjusted object; and

the generation sub-unit is configured to generate the target face image frame based on the original face image frame, the fused face spatial feature, and the reference face image frame.

In some embodiments of this application, the reconstruction sub-unit may be further configured to: perform, based on the fused face spatial feature, face reconstruction processing on the to-be-adjusted object, to obtain a reconstructed 3D face image corresponding to the to-be-adjusted object; and perform rendering and mapping processing on the reconstructed 3D face image, to obtain the reference face image frame corresponding to the to-be-adjusted object.

In some embodiments of this application, the generation sub-unit may be further configured to: perform multi-scale feature extraction on the original face image frame, to obtain original face feature images corresponding to the original face image frame on a plurality of scales; perform multi-scale feature extraction on the reference face image frame, to obtain reference face feature images corresponding to the reference face image frame on a plurality of scales; encode and map the fused face spatial feature, to obtain latent feature information corresponding to the fused face spatial feature; and fuse the original face feature images on the plurality of scales, the reference face feature images on the plurality of scales, and the latent feature information, to obtain the target face image frame.

In some embodiments of this application, the extraction unit may be further configured to perform spatial feature extraction on the original face image frame through an image generation model, to obtain the original face spatial feature corresponding to the original face image frame;

the interaction unit may be further configured to perform feature interaction processing on the audio driving information and the emotion driving information through the image generation model, to obtain the face local pose feature; and

the reconstruction unit may be further configured to perform, based on the original face spatial feature and the face local pose feature, face reconstruction processing on the to-be-adjusted object through the image generation model, to generate the target face image frame.

In some embodiments of this application, the image generation apparatus may further include a training unit, and the training unit may be configured to train the image generation model; and

the training unit may be further configured to: obtain training data, where the training data includes an original face image frame sample of a sample object, a target driving face image frame sample, and an audio driving information sample and an emotion driving information sample that correspond to the target driving face image frame sample; perform spatial feature extraction on the original face image frame sample through a preset image generation model, to obtain the original face spatial feature corresponding to the original face image frame sample; perform feature interaction processing on the audio driving information sample and the emotion driving information sample, to obtain a face local pose sample feature corresponding to the target driving face image frame sample; perform, based on the original face spatial feature and the face local pose sample feature, face reconstruction processing on the sample object, to obtain a predicted driving face image frame; and adjust, based on the target driving face image frame sample and the predicted driving face image frame, parameters of the preset image generation model, to obtain a trained image generation model.

In some embodiments of this application, the step of "adjusting, based on the target driving face image frame sample and the predicted driving face image frame, parameters of the preset image generation model, to obtain a trained image generation model" may include:

performing emotion recognition processing on the target driving face image frame sample, to obtain a first emotion recognition result corresponding to the target driving face image frame sample, and performing emotion recognition processing on the sample object in the predicted driving face image frame, to obtain a second emotion recognition result corresponding to the predicted driving face image frame;

calculating, based on the first emotion recognition result and the second emotion recognition result, emotion loss information of the preset image generation model;

determining, based on a similarity between the target driving face image frame sample and the predicted driving face image frame, reconstruction loss information of the preset image generation model; and

adjusting the parameters of the preset image generation model according to the emotion loss information and the reconstruction loss information, to obtain the trained image generation model.

In some embodiments of this application, the step of "adjusting the parameters of the preset image generation model according to the emotion loss information and the reconstruction loss information, to obtain the trained image generation model" may include:

performing spatial feature extraction on the target driving face image frame sample, to obtain a target face spatial feature corresponding to the target driving face image frame sample;

performing face key point extraction on the target face spatial feature, to obtain a first face key point corresponding to the target face spatial feature, and performing face key point extraction on the face local pose sample feature, to obtain a second face key point corresponding to the face local pose sample feature;

determining face key point loss information based on the first face key point and the second face key point;

determining, based on a feature distance between the face local pose sample feature and the target face spatial feature, regularization loss information of the preset image generation model; and

adjusting the parameters of the preset image generation model according to the emotion loss information, the reconstruction loss information, the face key point loss information, and the regularization loss information, to obtain the trained image generation model.

In some embodiments of this application, the step of "performing feature interaction processing on the audio driving information and the emotion driving information, to obtain a face local pose feature of the to-be-adjusted object issuing the voice content with the target emotion" may include:

sorting a token corresponding to each audio frame in the audio driving information in order of the audio frames, to obtain a sorted token sequence; adding a token corresponding to the emotion driving information to the sorted token sequence, to obtain an updated token sequence; for each token in the updated token sequence, extracting feature information of the token; processing the feature information of the token according to feature information of front and back tokens of the token; fusing the processed feature information of each token, to obtain interaction feature information; and predicting the face local pose feature based on the interaction feature information and the emotion driving information.

It can be learned from the foregoing that, in this embodiment, the obtaining unit 301 may obtain an original face image frame, audio driving information, and emotion driving information of a to-be-adjusted object, the original face image frame including an original face of the to-be-adjusted object, the audio driving information including voice content for the to-be-adjusted object, to drive a face pose of the original face to change according to the voice content, and the emotion driving information indicating a target emotion of the to-be-adjusted object when issuing the voice content, to drive the face pose of the original face to change according to the target emotion; the extraction unit 302 may perform spatial feature extraction on the original face image frame, to obtain an original face spatial feature corresponding to the original face image frame; the interaction unit 303 may perform feature interaction processing on the audio driving information and the emotion driving information, to obtain a face local pose feature of the to-be-adjusted object; and the face local pose feature may reflect the current voice content and the emotion-induced change in the face pose, so that the reconstruction unit 304 may perform face reconstruction processing on the to-be-adjusted object based on the original face spatial feature and the face local pose feature, thereby generating a target face image frame based on the original face image frame. In this application, partial face pose detail information of the to-be-adjusted object may be captured using the audio driving information and the emotion driving information, and then face adjustment is performed on the original face image frame based on the captured information, thereby obtaining the corresponding target face image frame. In this way, an improvement in generation efficiency and accuracy of the target face image frame is facilitated.

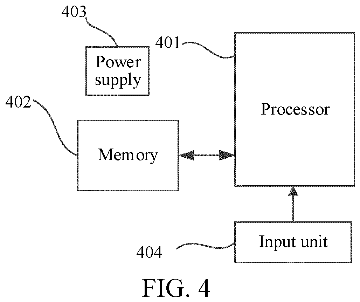

An embodiment of this application further provides an electronic device. FIG. 4 is a schematic structural diagram of an electronic device according to an embodiment of this application. The electronic device may be a terminal, a server, or the like.

The electronic device may include components such as a processor 401 of one or more processing cores, a memory 402 of one or more computer readable storage media, a power supply 403, and an input unit 404. A person skilled in the art may understand that the electronic device structure shown in FIG. 4 does not constitute a limit to the electronic device. The server may include more or fewer parts than those shown in the figure, may combine some parts, or may have different part arrangements.

The processor 401 is a control center of the electronic device, which is connected to various parts of the entire electronic device by using various interfaces and lines, and by running or executing a software program and/or module stored in the memory 402 and calling data stored in the memory 402, to implement various functions of the electronic device and process data. Optionally, the processor 401 may include one or more processing cores. Preferably, the processor 401 may integrate an application processor and a modem. The application processor mainly processes an operating system, a user interface, an application program, and the like. The modem mainly processes wireless communication. It may be understood that, the foregoing modem may not be integrated into the processor 401.

The memory 402 may be configured to store a software program and module. The processor 401 runs the software program and module stored in the memory 402, to execute various functional applications and data processing.

The memory 402 may mainly include a program storage area and a data storage area. The program storage area may store an operating system, an application program required by at least one function (for example, a sound playing function and an image playing function), or the like. The data storage area may store data created according to use of the electronic device. In addition, the memory 402 may include a high speed random access memory, and may also include a non-volatile memory, such as at least one magnetic disk storage device, a flash memory, or another volatile solid storage device. Correspondingly, the memory 402 may further include a memory controller, to provide access of the processor 401 to the memory 402.

The electronic device further includes the power supply 403 for supplying power to the components. Preferably, the power supply 403 may logically connect to the processor 401 by using a power supply management system, thereby implementing functions, such as charging, discharging, and power consumption management, by using the power supply management system. The power source 403 may further include one or more of a direct current or alternate current power source, a re-charging system, a power source fault detection circuit, a power source converter or an inverter, a power source state indicator, or any other components.

The electronic device may further include the input unit 404. The input unit 404 may be configured to receive entered numeric or character information and generate keyboard, mouse, joystick, optical, or trackball signal input related to user settings and function control.

Although not shown in the figure, the electronic device may further include a display unit, and the like. Details are not described herein again. In this embodiment, the processor 401 in the electronic device loads, into the memory 402 according to the following instructions, executable files corresponding to processes of one or more application programs, and the processor 401 runs the application programs stored in the memory 402 to implement the following various functions:

obtaining an original face image frame, audio driving information, and emotion driving information of a to-be-adjusted object, the original face image frame including an original face of the to-be-adjusted object, the audio driving information including voice content for the to-be-adjusted object, to drive a face pose of the original face to change according to the voice content, and the emotion driving information indicating a target emotion of the to-be-adjusted object when issuing the voice content, to drive the face pose of the original face to change according to the target emotion; performing spatial feature extraction on the original face image frame, to obtain an original face spatial feature corresponding to the original face image frame; performing feature interaction processing on the audio driving information and the emotion driving information, to obtain a face local pose feature of the to-be-adjusted object issuing the voice content with the target emotion; and performing, based on the original face spatial feature and the face local pose feature, face reconstruction processing on the to-be-adjusted object, to generate a target face image frame.

For an implementation of each of the foregoing operations, reference may be made to the foregoing embodiments. This is not described herein again.

A person of ordinary skill in the art may understand that, all or some steps of the methods in the foregoing embodiments may be implemented by using a computer program, or implemented through instructions controlling relevant hardware, and the computer program may be stored in a computer-readable storage medium and loaded and executed by a processor.

Accordingly, an embodiment of this application provides a computer-readable storage medium, storing a computer program. The computer program can be loaded by a processor, to perform the steps in any image generation method according to the embodiments of this application.

For an implementation of each of the foregoing operations, reference may be made to the foregoing embodiments. This is not described herein again.

The computer-readable storage medium may include: a read-only memory (ROM), a random access memory (RAM), a magnetic disk, an optical disc, or the like.

Because the computer program stored in the computer-readable storage medium may perform the steps of any image generation method provided in the embodiments of this application, the instructions can implement beneficial effects that can be implemented by any image generation method provided in the embodiments of this application. For details, reference may be made to the foregoing embodiments. Details are not described herein again.

According to one aspect of this application, a computer program product is provided. The computer program product includes a computer program, and the computer program is stored in a computer-readable storage medium. A processor of a computer device reads the computer program from the computer-readable storage medium, and the processor executes the computer program, to cause the computer device to perform a method provided in various optional implementations in the foregoing image generation aspects.

The image generation method and the related devices provided in the embodiments of this application are described in detail above. The principle and implementations of this application are described herein by using specific examples. The descriptions of the foregoing embodiments are merely used for helping understand the method and core ideas of this application. In addition, a person skilled in the art may make modifications in terms of the specific implementations and application scopes according to the idea of this application. In conclusion, the content of this specification

**EP 4 390 881 A1**

is not to be construed as a limitation on this application.

**Claims**

1. An image generation method, executable by an electronic device, and comprising:

   obtaining an original face image frame, audio driving information, and emotion driving information of a to-be-adjusted object, the original face image frame comprising an original face of the to-be-adjusted object, the audio driving information comprising voice content for the to-be-adjusted object and being configured to drive a face pose of the original face to change according to the voice content, and the emotion driving information indicating a target emotion of the to-be-adjusted object when issuing the voice content and being configured to drive the face pose of the original face to change according to the target emotion;
   extracting an original face spatial feature from the original face image frame;
   performing feature interaction processing on the audio driving information and the emotion driving information, to obtain a face local pose feature of the to-be-adjusted object when issuing the voice content with the target emotion; and
   performing, based on the original face spatial feature and the face local pose feature, face reconstruction processing on the to-be-adjusted object, to generate a target face image frame.

2. The method according to claim 1, wherein the performing feature interaction processing on the audio driving information and the emotion driving information, to obtain a face local pose feature of the to-be-adjusted object issuing the voice content with the target emotion comprises:

   performing feature interaction processing on the audio driving information and the emotion driving information, to obtain interaction feature information; and
   predicting the face local pose feature based on the interaction feature information and the emotion driving information.

3. The method according to claim 2, wherein the audio driving information comprises a plurality of audio frames, and the performing feature interaction processing on the audio driving information and the emotion driving information, to obtain interaction feature information comprises:

   extracting object identity information in the original face spatial feature;
   for each of the plurality of audio frames in the audio driving information, encoding position information of the audio frame, to obtain a position code of the audio frame;
   combining position codes respectively corresponding to the plurality of audio frames, to obtain position encoding, PE, information corresponding to the audio driving information; and
   performing feature interaction processing on the object identity information, the PE information, the audio driving information, and the emotion driving information, to obtain the interaction feature information.

4. The method according to claim 2 or 3, wherein the predicting the face local pose feature based on the interaction feature information and the emotion driving information comprises:

   fusing the interaction feature information and the emotion driving information, to obtain fused feature information; and
   decoding the fused feature information, to obtain the face local pose feature.

5. The method according to claim 1, wherein the performing feature interaction processing on the audio driving information and the emotion driving information, to obtain a face local pose feature of the to-be-adjusted object when issuing the voice content with the target emotion comprises:

   obtaining preset emotion intensity information corresponding to the emotion driving information; and
   performing feature interaction processing on the audio driving information, the emotion driving information, and the preset emotion intensity information, to obtain the face local pose feature and updated emotion intensity information; and
   the performing, based on the original face spatial feature and the face local pose feature, face reconstruction processing on the to-be-adjusted object, to generate a target face image frame comprises:

performing, based on the original face spatial feature, the face local pose feature, and the updated emotion intensity information, face reconstruction processing on the to-be-adjusted object, to generate the target face image frame.

6. The method according to any one of claims 1 to 4, wherein the performing, based on the original face spatial feature and the face local pose feature, face reconstruction processing on the to-be-adjusted object, to generate a target face image frame comprises:

fusing the original face spatial feature and the face local pose feature, to obtain a fused face spatial feature;
performing, based on the fused face spatial feature, face reconstruction processing on the to-be-adjusted object, to obtain a reference face image frame corresponding to the to-be-adjusted object; and
generating the target face image frame based on the original face image frame, the fused face spatial feature, and the reference face image frame.

7. The method according to claim 6, wherein the performing, based on the fused face spatial feature, face reconstruction processing on the to-be-adjusted object, to obtain a reference face image frame corresponding to the to-be-adjusted object comprises:

performing, based on the fused face spatial feature, face reconstruction processing on the to-be-adjusted object, to obtain a reconstructed three-dimensional, 3D, face image corresponding to the to-be-adjusted object; and
performing rendering and mapping processing on the reconstructed 3D face image, to obtain the reference face image frame corresponding to the to-be-adjusted object.

8. The method according to claim 6 or 7, wherein the generating the target face image frame based on the original face image frame, the fused face spatial feature, and the reference face image frame comprises:

performing multi-scale feature extraction on the original face image frame, to obtain original face feature images corresponding to the original face image frame on a plurality of scales;
performing multi-scale feature extraction on the reference face image frame, to obtain reference face feature images corresponding to the reference face image frame on a plurality of scales;
encoding and mapping the fused face spatial feature, to obtain latent feature information corresponding to the fused face spatial feature; and
fusing the original face feature images on the plurality of scales, the reference face feature images on the plurality of scales, and the latent feature information, to obtain the target face image frame.

9. The method according to any one of claims 1 to 8, wherein the extracting an original face spatial feature from the original face image frame comprises:

extracting the original face spatial feature from the original face image frame by using an image generation model;
the performing feature interaction processing on the audio driving information and the emotion driving information, to obtain a face local pose feature of the to-be-adjusted object issuing the voice content with the target emotion comprises:

performing feature interaction processing on the audio driving information and the emotion driving information by using the image generation model, to obtain the face local pose feature; and
the performing, based on the original face spatial feature and the face local pose feature, face reconstruction processing on the to-be-adjusted object, to generate a target face image frame comprises:
performing, based on the original face spatial feature and the face local pose feature, face reconstruction processing on the to-be-adjusted object through the image generation model, to generate the target face image frame.

10. The method according to claim 9, wherein before the performing spatial feature extraction on the original face image frame through an image generation model, to obtain the original face spatial feature corresponding to the original face image frame, the method further comprises:

obtaining training data, wherein the training data comprises an original face image frame sample of a sample object, a target driving face image frame sample, and an audio driving information sample and an emotion driving information sample that correspond to the target driving face image frame sample;

performing spatial feature extraction on the original face image frame sample through a preset image generation model, to obtain the original face spatial feature corresponding to the original face image frame sample;

performing feature interaction processing on the audio driving information sample and the emotion driving information sample, to obtain a face local pose sample feature corresponding to the target driving face image frame sample;

performing, based on the original face spatial feature and the face local pose sample feature, face reconstruction processing on the sample object, to obtain a predicted driving face image frame; and

adjusting, based on the target driving face image frame sample and the predicted driving face image frame, parameters of the preset image generation model, to obtain a trained image generation model.

11. The method according to claim 10, wherein the adjusting, based on the target driving face image frame sample and the predicted driving face image frame, parameters of the preset image generation model, to obtain a trained image generation model comprises:

performing emotion recognition processing on the target driving face image frame sample, to obtain a first emotion recognition result corresponding to the target driving face image frame sample, and performing emotion recognition processing on the sample object in the predicted driving face image frame, to obtain a second emotion recognition result corresponding to the predicted driving face image frame;

calculating, based on the first emotion recognition result and the second emotion recognition result, emotion loss information of the preset image generation model;

determining, based on a similarity between the target driving face image frame sample and the predicted driving face image frame, reconstruction loss information of the preset image generation model; and

adjusting the parameters of the preset image generation model according to the emotion loss information and the reconstruction loss information, to obtain the trained image generation model.

12. The method according to claim 11, wherein the adjusting the parameters of the preset image generation model according to the emotion loss information and the reconstruction loss information, to obtain the trained image generation model comprises:

performing spatial feature extraction on the target driving face image frame sample, to obtain a target face spatial feature corresponding to the target driving face image frame sample;

performing face key point extraction on the target face spatial feature, to obtain a first face key point corresponding to the target face spatial feature, and performing face key point extraction on the face local pose sample feature, to obtain a second face key point corresponding to the face local pose sample feature;

determining face key point loss information based on the first face key point and the second face key point;

determining, based on a feature distance between the face local pose sample feature and the target face spatial feature, regularization loss information of the preset image generation model; and

adjusting the parameters of the preset image generation model according to the emotion loss information, the reconstruction loss information, the face key point loss information, and the regularization loss information, to obtain the trained image generation model.

13. The method according to claim 1, wherein the audio driving information comprising at least one audio frame, and the performing feature interaction processing on the audio driving information and the emotion driving information, to obtain a face local pose feature of the to-be-adjusted object issuing the voice content with the target emotion comprises:

sorting a token respectively corresponding to the at least one audio frame in the audio driving information in an order of the audio frame, to obtain a sorted token sequence;

adding a token corresponding to the emotion driving information to the sorted token sequence, to obtain an updated token sequence;

for each token in the updated token sequence, extracting feature information of the token; processing the feature information of the token by using feature information of a previous token and a subsequent token of the token, to obtain processed feature information of the token;

fusing the processed feature information of each token, to obtain interaction feature information; and predicting the face local pose feature based on the interaction feature information and the emotion driving information.

14. An image generation apparatus, deployed on an electronic device, and comprising:

an obtaining unit, configured to obtain an original face image frame, audio driving information, and emotion driving information of a to-be-adjusted object, the original face image frame comprising an original face of the to-be-adjusted object, the audio driving information comprising voice content for the to-be-adjusted object and being configured to drive a face pose of the original face to change according to the voice content, and the emotion driving information indicating a target emotion of the to-be-adjusted object when issuing the voice content and being configured to drive the face pose of the original face to change according to the target emotion;

an extraction unit, configured to extract an original face spatial feature from the original face image frame;

an interaction unit, configured to perform feature interaction processing on the audio driving information and the emotion driving information, to obtain a face local pose feature of the to-be-adjusted object when issuing the voice content with the target emotion; and

a reconstruction unit, configured to perform, based on the original face spatial feature and the face local pose feature, face reconstruction processing on the to-be-adjusted object, to generate a target face image frame.

15. An electronic device, comprising a memory and a processor, the memory storing a computer program, and the processor being configured to run the computer program in the memory to perform the method according to any one of claims 1 to 13.

16. A computer-readable storage medium, the computer-readable storage medium storing a computer program, and the computer program being adapted to be loaded by a processor to perform the method according to any one of claims 1 to 13.

17. A computer program product, comprising a computer program, the computer program, when executed by a processor, implementing the method according to any one of claims 1 to 13.

Terminal 10          Server 11

## FIG. 1a

| |
|---|
| Obtain an original face image frame, audio driving information, and emotion driving information — 101 |

↓

| |
|---|
| Extract an original face spatial feature from the original face image frame — 102 |

↓

| |
|---|
| Perform feature interaction processing on the audio driving information and the emotion driving information, to obtain a face local pose feature of the to-be-adjusted object when issuing the voice content with the target emotion — 103 |

↓

| |
|---|
| Perform, based on the original face spatial feature and the face local pose feature, face reconstruction processing on the to-be-adjusted object, to generate a target face image frame — 104 |

## FIG. 1b

Audio driving information

Scorned

## FIG. 1c

(1)                                        (2)

FIG. 1d

FIG. 1e

FIG. 1f

A server obtains an original face image frame, audio driving information, and emotion driving information of a to-be-adjusted object — 201

The server extracts an original face spatial feature from the original face image frame — 202

The server performs feature interaction processing on the audio driving information and the emotion driving information, to obtain interaction feature information — 203

The server predicts the face local pose feature based on the interaction feature information and the emotion driving information — 204

The server performs, based on the original face spatial feature and the face local pose feature, face reconstruction processing on the to-be-adjusted object, to generate a target face image frame — 205

FIG. 2

— 301
Obtaining unit

— 302
Extraction unit

Reconstruction unit

Interaction unit

— 304

— 303

FIG. 3

403

401

Power
supply

402

Processor

Memory

404

Input unit

FIG. 4

## INTERNATIONAL SEARCH REPORT

| | International application No. |
|---|---|
| | **PCT/CN2023/112814** |

| **A.** | **CLASSIFICATION OF SUBJECT MATTER** |
|---|---|
| | G06V 40/16(2022.01)i |

According to International Patent Classification (IPC) or to both national classification and IPC

| **B.** | **FIELDS SEARCHED** |
|---|---|

Minimum documentation searched (classification system followed by classification symbols)

G06V, G06F

Documentation searched other than minimum documentation to the extent that such documents are included in the fields searched

Electronic data base consulted during the international search (name of data base and, where practicable, search terms used)

VEN, CNABS, CNTXT, WOTXT, EPTXT, USTXT, CNKI, IEEE: 图像, 视频, 表情, 姿态, 神情, 脸, 面, 情绪, 心情, 音频, 声音, 语音, 口型, 嘴型, 细节, 重建, 融合, image, video, pose, face, voice, audio, mood, emotion, restoration, generate, fusion

| **C.** | **DOCUMENTS CONSIDERED TO BE RELEVANT** |
|---|---|

| Category* | Citation of document, with indication, where appropriate, of the relevant passages | Relevant to claim No. |
|---|---|---|
| PX | CN 115205949 A (TENCENT TECHNOLOGY (SHENZHEN) CO., LTD.) 18 October 2022 (2022-10-18)<br>claims 1-15, and description, paragraph 49 | 1-17 |
| Y | CN 111401101 A (SHANGHAI ZHIZHEN INTELLIGENT NETWORK TECHNOLOGY CO., LTD.) 10 July 2020 (2020-07-10)<br>description, paragraphs 0040-0174 | 1-17 |
| Y | CN 114245215 A (TSINGHUA UNIVERSITY et al.) 25 March 2022 (2022-03-25)<br>claim 1, and description, paragraphs 5-34 | 1-17 |
| A | CN 113793408 A (SUQIAN SILICON INTELLIGENCE TECHNOLOGY CO., LTD.) 14 December 2021 (2021-12-14)<br>entire document | 1-17 |
| A | CN 114863563 A (INDUSTRIAL AND COMMERCIAL BANK OF CHINA CO., LTD.) 05 August 2022 (2022-08-05)<br>entire document | 1-17 |

☑ Further documents are listed in the continuation of Box C.     ☑ See patent family annex.

| * | Special categories of cited documents: |
|---|---|
| "A" | document defining the general state of the art which is not considered to be of particular relevance |
| "D" | document cited by the applicant in the international application |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **07 October 2023** | **01 November 2023** |

| Name and mailing address of the ISA/CN | Authorized officer |
|---|---|
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/112814** |

| C. | DOCUMENTS CONSIDERED TO BE RELEVANT | |
| --- | --- | --- |
| Category* | Citation of document, with indication, where appropriate, of the relevant passages | Relevant to claim No. |
| A | US 10970526 B1 (INDUSTRIAL TECHNOLOGY RESEARCH INSTITUTE) 06 April 2021 (2021-04-06)<br>    entire document | 1-17 |
| A | US 2019197755 A1 (VATS, Nitin) 27 June 2019 (2019-06-27)<br>    entire document | 1-17 |

Form PCT/ISA/210 (second sheet) (July 2022)

**INTERNATIONAL SEARCH REPORT**
Information on patent family members

| International application No. |
| --- |
| **PCT/CN2023/112814** |

| Patent document cited in search report | | | Publication date (day/month/year) | Patent family member(s) | | | Publication date (day/month/year) |
| --- | --- | --- | --- | --- | --- | --- | --- |
| CN | 115205949 | A | 18 October 2022 | None | | | |
| CN | 111401101 | A | 10 July 2020 | None | | | |
| CN | 114245215 | A | 25 March 2022 | None | | | |
| CN | 113793408 | A | 14 December 2021 | None | | | |
| CN | 114863563 | A | 05 August 2022 | None | | | |
| US | 10970526 | B1 | 06 April 2021 | TW | 202119274 | A | 16 May 2021 |
| | | | | CN | 112784660 | A | 11 May 2021 |
| US | 2019197755 | A1 | 27 June 2019 | WO | 2017137947 | A1 | 17 August 2017 |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202211080126